# EUROPEAN PATENT APPLICATION

(11) **EP 2 899 650 A1**
(43) Date of publication of application: **29.07.2015**
(21) Application number: 15150945.2
(22) Date of filing: 13.01.2015
(51) Int. Cl.: G06F 17/30, H04L 12/58

(54) **Information processing system, terminal apparatus, and control method for terminal apparatus**

(30) Priority: 17.01.2014 JP 2014007230; 09.06.2014 JP 2014118900
(71) Applicant: Ricoh Company, Ltd., Tokyo 143-8555 (JP)
(72) Inventor: Hirakata, Satoru, Tokyo, 143-8555 (JP)
(74) Representative: Maury, Richard Philip

(57) **Abstract**

An information processing system (1, 1A, 1B) is provided that interconnects at least one information processing apparatus (11, 12, 14, 16, 18) and a terminal apparatus (13, 17) used by a user. The information processing system includes a file storage unit (14, 18) that stores a file to be shared, a delivery unit (12) that delivers information received from one terminal apparatus to another terminal apparatus that is associated with the one terminal apparatus, a display unit (21) that displays at the terminal apparatus a file acquired from the file storage unit and information exchanged between the terminal apparatuses via the delivery unit, and a transmitting unit (27) that transmits to the delivery unit information for changing the display of the file displayed by the display unit based on a user operation of selecting the information exchanged between the terminal apparatuses and displayed by the display unit.

## Description

### BACKGROUND OF THE INVENTION

### 1. Field of the Invention

The present invention relates to an information processing system, a terminal apparatus, and a method for controlling a terminal apparatus.

### 2. Description of the Related Art

Group messaging systems are known that enable group file management using instant messaging (messenger). For example, a messenger server and a cloud server may be arranged to cooperate with each other, and when an activity occurs such as registration of a file managed by a sharing group of the cloud server, a notification that such an activity has occurred may be transmitted via a group chat room of the messenger mapped to the sharing group (see e.g. Japanese Laid-Open Patent Publication No. 2013-161481).

To share a file with multiple users, a user may use an information processing apparatus such as a file server that enables sharing a file with multiple users. Also, a user may use an information processing apparatus such as a chat server to exchange comments on a file with the multiple users sharing the file.

However, in a terminal apparatus that is configured to share a file with multiple users and exchange comments on a file with multiple users, there has been no mechanism for enabling cooperation between the file sharing function and the file comment exchange function of the terminal apparatus.

### SUMMARY OF THE INVENTION

An aspect of the present invention relates to providing an information processing system, a terminal apparatus, and a control method for the terminal apparatus that enable cooperation between a file sharing function and a file comment exchange function.

According to one embodiment of the present invention, an information processing system is provided that interconnects at least one information processing apparatus and a terminal apparatus used by a user. The information processing system includes a file storage unit that stores a file to be shared, a delivery unit that delivers information received from one terminal apparatus to another terminal apparatus that is associated with the one terminal apparatus, a display unit that displays at the terminal apparatus a file acquired from the file storage unit and information exchanged between the terminal apparatuses via the delivery unit, and a transmitting unit that transmits to the delivery unit information for changing the display of the file displayed by the display unit based on a user operation of selecting the information exchanged between the terminal apparatuses and displayed by the display unit.

### BRIEF DESCRIPTION OF THE DRAWINGS

FIG. 1 illustrates an exemplary configuration of an information processing system according to an embodiment of the present invention;
FIG. 2 illustrates an exemplary hardware configuration of a computer according to an embodiment of the present invention;
FIG. 3 illustrates an exemplary hardware configuration of a smart device according to an embodiment of the present invention;
FIG. 4 illustrates an exemplary functional configuration of the smart device;
FIG. 5 illustrates an exemplary functional configuration of a chat server according to an embodiment of the present invention;
FIG. 6 illustrates an exemplary functional configuration of a relay server according to an embodiment of the present invention;
FIG. 7 illustrates an exemplary functional configuration of a file server according to an embodiment of the present invention;
FIG. 8 illustrates an exemplary web UI displaying a two-dimensional code;
FIG. 9 illustrates an exemplary screen for scanning a two-dimensional code;
FIG. 10 illustrates an example of information obtained from the two-dimensional code;
FIG. 11 is a flowchart illustrating an exemplary smart device registration process;
FIG. 12 illustrates an exemplary success screen;
FIG. 13 is a sequence chart illustrating an exemplary group creation process;
FIG. 14 illustrates an exemplary group creation screen;
FIG. 15 illustrates an exemplary group selection screen;
FIG. 16 illustrates an exemplary chat screen;
FIG. 17 illustrates an exemplary file selection screen;
FIG. 18 illustrates an exemplary chat screen displaying content of a file;
FIG. 19 is a flowchart illustrating an exemplary character string selection operation;
FIG. 20 illustrates an exemplary chat screen displaying highlighted content;
FIG. 21 illustrates an example of information of a character string selected by a user;
FIG. 22 is a sequence chart illustrating an exemplary highlighting process performed at the information processing system;
FIG. 23 is a flowchart illustrating an exemplary selection operation;
FIG. 24 illustrates an example of image position information included in information of a content selected by a user;
FIG. 25 is a sequence chart illustrating an exemplary appending display process performed at the information processing system;
FIG. 26 is a sequence chart illustrating another exemplary highlighting process performed at the information processing system;
FIG. 27 illustrates another exemplary chat screen displaying highlighted content;
FIG. 28 illustrates another exemplary chat screen;
FIG. 29 is a sequence chart illustrating a process performed when a character string in a chat area displayed as a hyperlink is selected;
FIG. 30 illustrates a configuration of another information processing system according to another embodiment of the present invention;
FIG. 31 illustrates another exemplary functional configuration of the smart device;
FIG. 32 illustrates another exemplary functional configuration of the file server;
FIG. 33 illustrates an exemplary registration process using a certificate;
FIG. 34 illustrates an exemplary web UI provided by a management tool of the file server;
FIG. 35 illustrates exemplary screen images of a certificate download page;
FIG. 36 is a sequence chart illustrating another exemplary smart device registration process;
FIG. 37 is a sequence chart illustrating a process performed after a certificate download button is pressed;
FIG. 38 is a flowchart illustrating an exemplary process of registering a smart device at the file server;
FIG. 39 illustrates an exemplary process of checking the validity of a certificate; and
FIG. 40 illustrates another exemplary configuration of an information processing system according to another embodiment of the present invention.

### DESCRIPTION OF THE PREFERRED EMBODIMENTS

In the following, embodiments of the present invention are described with reference to the accompanying drawings.

### [First Embodiment]

### <System Configuration>

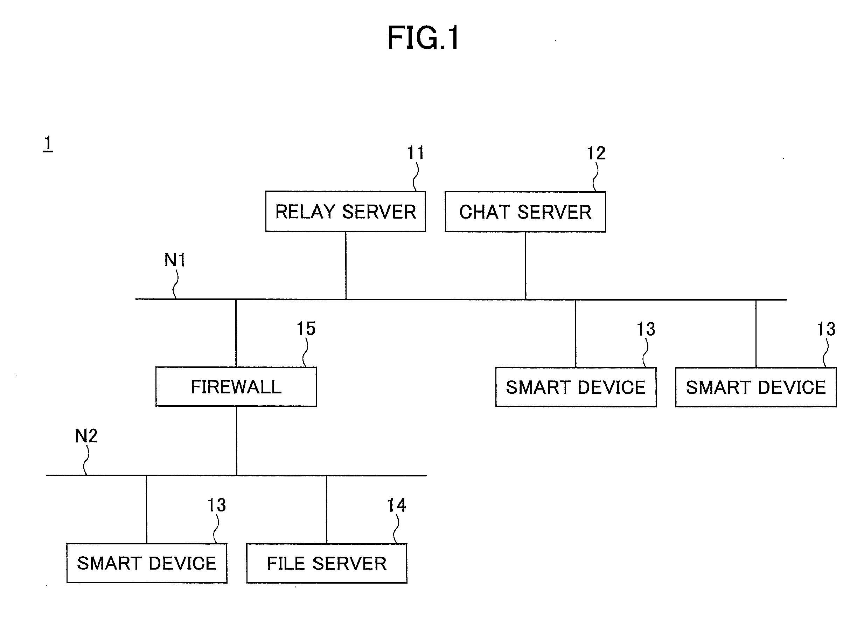

FIG. 1 illustrates an exemplary configuration of an information processing system 1 according to a first embodiment of the present invention. In FIG. 1, the information processing system 1 includes a relay server 11, a chat server 12, a smart device 13, a file server 14, and a firewall (FW) 15.

The relay server 11, the chat server 12, and at least some of the smart devices 13 are connected to a network N1 such as the Internet. Also, at least some of the smart devices 13 and the file server 14 are connected to a network N2 such as a LAN. The network N1 and the network N2 are interconnected via the FW 15.

The relay server 11 provisionally accepts a request addressed to the file server 14 that is connected to the network N2 from the chat server 12 and the smart devices 13 that are connected to the network N1, and relays the request to the file server 14.

The chat server 12 accepts and delivers chat content and the like to enable the smart devices 13 to chat with one another. The smart device 13 is an example of a terminal device used by a user.

The file server 14 stores files shared by users and logs of chat content exchanged between users through the chat server 12, for example. Because the file server 14 is connected to the network N2, the relay server 11, the chat server 12, and the smart devices 13 that are connected to the network N1 are unable to directly access that file server 14. However, the file server 14 is able to access the relay server 11, the chat server 12, and the smart devices 13 that are connected to the network N1.

The file server 14 constantly queries the relay server 11 to determine whether the relay server 11 has accepted a request. If the relay server 11 has accepted a request, the file server 14 acquires the request from the relay server 11 and processes the request. The file server 14 then transmits the processing result of the request to the relay server 11. The smart device 13 that has issued the request may thus receive the processing result of the request from the relay server 11. As described above, in the present embodiment, a request addressed to the file server 14, which is connected to the network N2, from a smart device 13 connected to the network N1 is indirectly transmitted to the file server 14 via the relay server 11.

The relay server 11, the chat server 12, and the smart devices 13 that are connected to the network N1 are capable of communicating with each other. Also, the smart devices 13 and the file server 14 that are connected to the network N2 are capable of communicating with each other. In FIG. 1, the smart device 13 may be a device that may be operated by a user such as a smartphone, a tablet terminal, a mobile phone, or a notebook PC, for example.

Note that the configuration of the information processing system 1 illustrated in FIG. 1 is merely one example, and various other system configurations may be implemented according to their intended use or purpose. For example, the functions of the relay server 11, the chat server 12, and the file server 14 of FIG. 1 may be allocated to multiple computers. Also, the relay server 11 and the chat server 12 of FIG. 1 may be integrated into a single computer, for example.

### <Hardware Configuration>

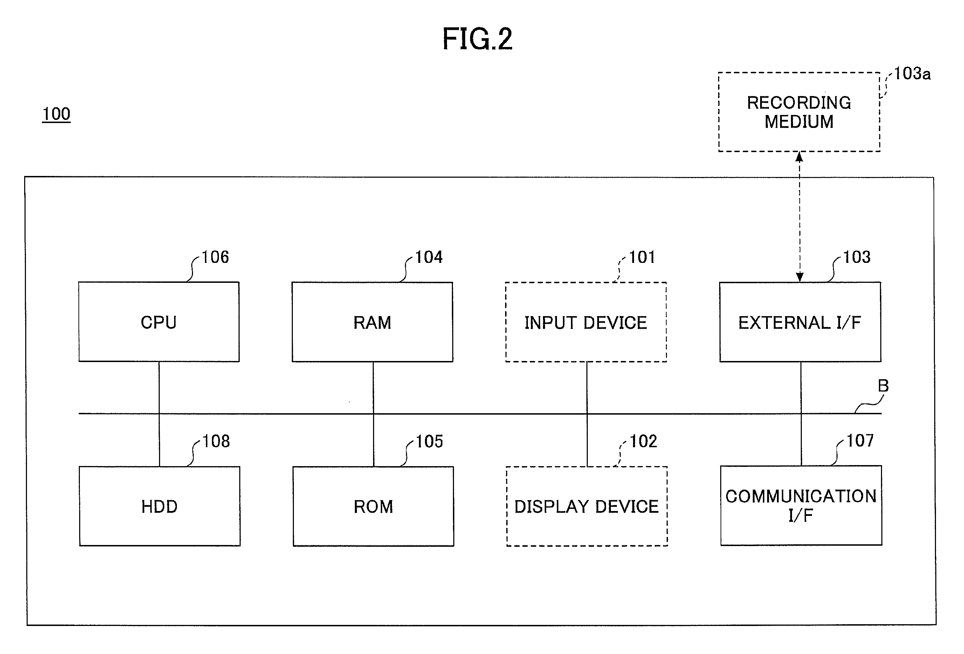

The relay server 11, the chat server 12, and the file server 14 may be implemented by a computer having a hardware configuration as illustrated in FIG. 2, for example. FIG. 2 is a block diagram illustrating an exemplary hardware configuration of a computer 100.

In FIG. 2, the computer 100 includes an input device 101, a display device 102, an external I/F 103, a RAM 104, a ROM 105, a CPU 106, a communication I/F 107, and a hard disk drive (HDD) 108 that are interconnected via a bus B. Note that in some embodiments, the input device 101 and the display device 102 may be connected to the computer 100 when they need to be used, for example.

The input device 101 may include a keyboard and/or a mouse, for example, and is used to input various operation signals to the computer 100. The display device 102 may include a display, for example, and is configured to display processing results of the computer 100. The communication I/F 107 is an interface for connecting the computer 100 to the networks N1 and N2. The computer 100 establishes data communication with other computers 100 via the communication I/F 107.

The HDD 108 is a nonvolatile storage device storing programs and data. The programs stored in the HDD 108 may include an operating system (OS) corresponding to basic software controlling overall operations of the computer 100, and application software providing various functions under the control of the OS, for example. Also, the HDD 108 manages the stored programs and data using a predetermined file system and/or database (DB).

The external I/F 103 is an interface between the computer 100 and an external device. The external device may be a recording medium 103a, for example. The computer 100 may read information from and/or write information on the recording medium 103a via the external I/F 103. Specific examples of the recording medium 103a include a flexible disk, a compact disk (CD), a digital versatile disk (DVD), a SD memory card, a universal serial bus (USB) memory, and the like.

The ROM 105 is a nonvolatile semiconductor memory (storage device) that can store programs and/or data even when the power is turned off. The ROM 105 stores programs and data such as a basic input/output system (BIOS) to be executed when the computer 100 is started, OS settings, network settings, and the like. The RAM 104 is a volatile semiconductor memory (storage device) that temporarily stores programs and/or data.

The CPU 106 includes an arithmetic and logic unit that reads a program and/or data from a storage device such as the ROM 105 and/or the HDD 108, loads the program and/or data in the RAM 104, and executes processes according to the program and/or data to control the overall operations and functions of the computer 100.

The computer 100 of the present embodiment may implement various processes as described below using the above hardware configuration.

### <Smart Device>

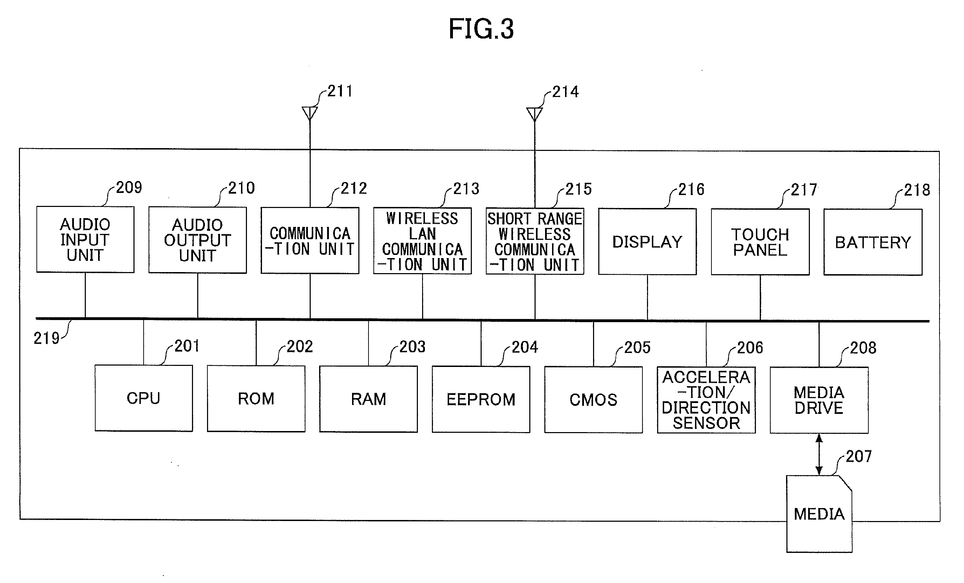

FIG. 3 illustrates an exemplary hardware configuration of the smart device 13 according to the present embodiment. In FIG. 3, the smart device 13 includes a CPU 201, a ROM 202, a RAM 203, an EEPROM (Electrically Erasable Read Only Memory) 204, a CMOS (complementary metal-oxide semiconductor) sensor 205, an acceleration/direction sensor 206, and a media drive 208.

The CPU 201 controls overall operations of the smart device 13. The ROM 202 stores basic input/output programs. The RAM 203 is used as a work area of the CPU 201. The EEPROM 204 reads and writes data according to control of the CPU 201. The CMOS sensor 205 captures an image of an object and obtains image data of the object according to control by the CPU 201. The acceleration/direction sensor 206 may include an electromagnetic compass or a gyrocompass that detects terrestrial magnetism, and an acceleration sensor, for example. The media drive 208 controls reading/writing (storing) of data with respect to various recording media 207 such as flash memory. The recording media 207 may be detachably loaded into the media drive 208, so that data recorded in the recording media 207 can be read from the recording media 207 and/or new data can be written (stored) into the recording media 207.

The EEPROM 204 may store an OS to be executed by the CPU 201 and required association information for setting up a network, for example. Note that applications for executing various processes according to the present embodiment may be stored in the EEPROM 204 or the recording media 207, for example.

The CMOS sensor 205 is an image sensor that converts light into an electrical charge to digitize an image of an object. The CMOS sensor 205 is not limited to a CMOS sensor but may be other types of image sensors such as a CCD (Charge Coupled Device) sensor as long as the sensor can capture an image of an object.

In FIG. 3, the smart device 13 further includes an audio input unit 209, an audio output unit 210, an antenna 211, a communication unit 212, a wireless LAN communication unit 213, a short range wireless communication antenna 214, a short range wireless communication unit 215, a display 216, a touch panel 217, and a bus line 219.

The audio input unit 209 converts audio into audio signals. The audio output unit 210 converts audio signals into audio. The communication unit 212 transmits/receives wireless signals to/from a nearest base station using the antenna 211. The wireless LAN communication unit 213 establishes wireless communication with an access point according to the IEEE80411 standard. The short range wireless communication unit 215 establishes short range wireless communication (e.g., Bluetooth (registered trademark) communication) using the short range wireless communication antenna 214.

The display 216 may be a liquid crystal display or an organic electro-luminescence display that displays an image of an object and various icons, for example. The touch panel 217 may be, for example, a pressure sensitive panel or an electrostatic panel arranged on the display 216 that detects a location (touch position) on the display 216 touched by a finger, a pen, or the like, for example. The bus line 219 may be, for example, an address bus or a data bus for electrically connecting the aforementioned parts and components of the smart device 13.

The smart device 13 also includes a dedicated battery 218. The smart device 13 is driven by the battery 218. Note, also, that the audio input unit 209 includes a microphone into which audio is input. The audio output unit 210 includes a speaker from which audio is output.

The smart device 13 of the present embodiment may implement various processes described below using the above hardware configuration. Note that the above-described hardware configuration of the smart device 13 is merely an illustrative example, and the smart device 13 may have various other hardware configurations.

### <Software Configuration>

### «Smart Device»

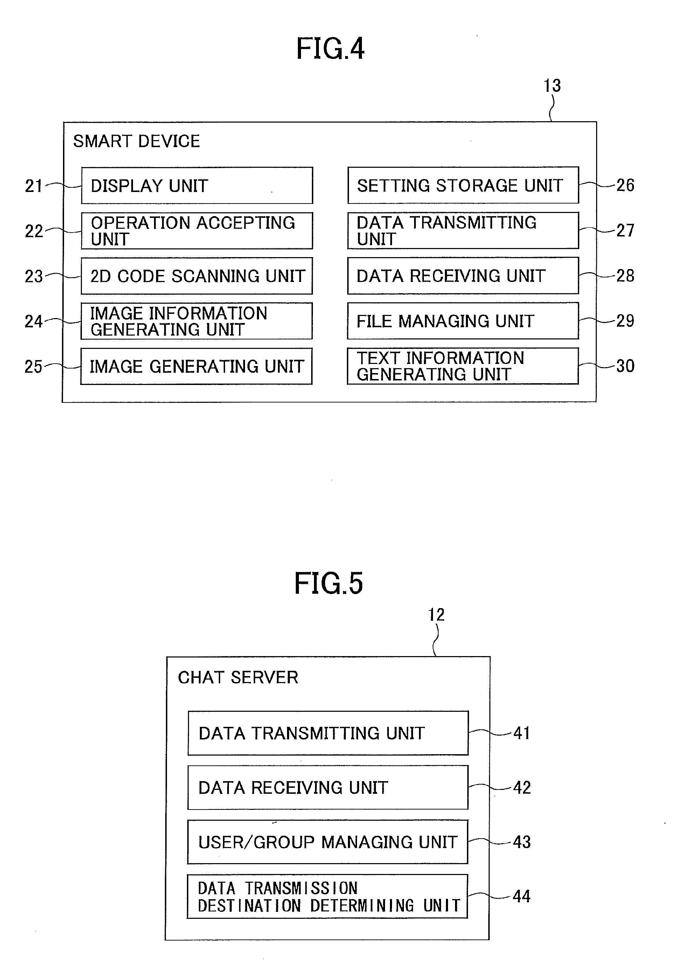

The smart device 13 of the present embodiment may have a functional configuration as illustrated in FIG. 4, for example. FIG. 4 is a block diagram illustrating an exemplary functional configuration of the smart device 13 according to the present embodiment. The smart device 13 may execute a relevant application program (hereinafter referred to as "application") to implement the functions of a display unit 21, an operation accepting unit 22, a 2D (two-dimensional) code scanning unit 23, an image information generating unit 24, an image generation unit 25, a setting storage unit 26, a data transmitting unit 27, a data receiving unit 28, a file managing unit 29, and a text information generating unit 30.

The display unit 21 displays file content, chat content, and a file selection screen to a user, for example. The operation accepting unit 22 accepts an operation from the user. The 2D code scanning unit 23 scans a 2D code.

The image information generating unit 24 generates image information such as image position information and a file name of a partial image selected by a user from a file image displayed by the display unit 21, for example. The image generating unit 25 generates an image based on image position information. The setting storage unit 26 stores a user name, a password, a group, and other setting information.

The data transmitting unit 27 transmits information such as chat contents and image position information, for example. The data receiving unit 28 receives information such as chat content and image position information of the chat, and files, for example. The file managing unit 29 performs operations such as storing or discarding a cache of a received file. The text information generating unit 30 generates character string information such as a file name and position information of a character string selected by a user from a file displayed by the display unit 21, for example. Also, the text information generating unit 30 generates character string information of a character string selected by the user from chat content displayed by the display unit 21, for example.

### «Chat Server»

The chat server 12 according to the present embodiment may have a functional configuration as illustrated in FIG. 5, for example. FIG. 5 is a block diagram illustrating an exemplary functional configuration of the chat server 12 according to the present embodiment. For example, the chat server 12 may execute a relevant program to implement the functions of a data transmitting unit 41, a data receiving unit 42, a user/group managing unit 43, and a data transmission destination determining unit 44.

The data transmitting unit 41 transmits data such as chat content. The data receiving unit 42 receives data such as chat content. The user/group managing unit 43 manages users participating in a chat and groups to which chat contents are to be transmitted, for example. The data transmission destination determining unit 44 determines a group to which chat contents are to be transmitted. The chat server 12 provides a chat function.

### «Relay Server»

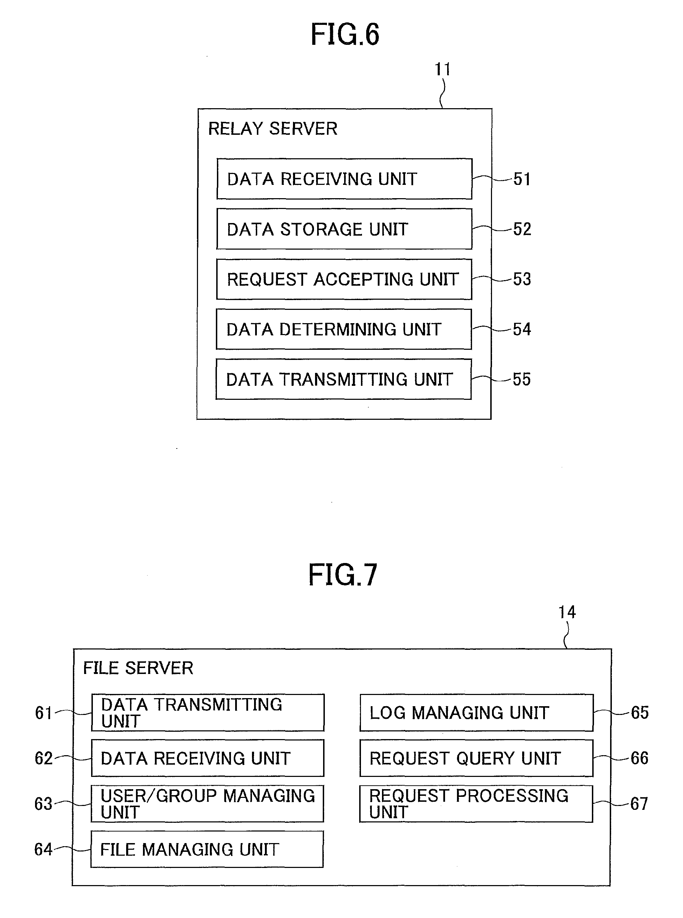

The relay server 11 according to the present embodiment may have a functional configuration as illustrated in FIG. 6, for example. FIG. 6 is a block diagram illustrating an exemplary functional configuration of the relay server 11 according to the present embodiment. For example, the relay server 11 may execute a relevant program to implement the functions of a data receiving unit 51, a data storage unit 52, a request accepting unit 53, a data determining unit 54, and a data transmitting unit 55.

The data receiving unit 51 receives data from the smart device 13 that is connected to the network N1, a smart device ID of the sender of the data, and a file server ID of a destination for the data, for example. The data storage unit 52 stores the various types of data received by the data receiving unit 51 in association with each other. The request accepting unit 53 accepts a query from the file server 14 regarding the existence of a request to be processed.

The data determining unit 54 determines whether data associated with the file server ID of the file server 14 that has made the query to the request accepting unit 53 receives a query is stored. When the data determining unit 54 determines that such data is stored, the data transmitting unit 55 transmits the data to the file server 14 that has made the query.

### «File Server»

The file server 14 according to the present embodiment may have a functional configuration as illustrated in FIG. 7, for example. FIG. 7 is a block diagram illustrating an exemplary functional configuration of the file server 14 according to the present embodiment. For example, the file server 14 may execute a relevant program to implement the functions of a data transmitting unit 61, a data receiving unit 62, a user/group managing unit 63, a file managing unit 64, a log managing unit 65, a request query unit 66, and a request processing unit 67.

The data transmitting unit 61 transmits data such as a file and a processing result of a request, for example. The data receiving unit 62 receives data such as a file, a log of chat contents, and a request from the smart device 13, for example. The user/group managing unit 63 manages users participating in a chat and groups to which chat contents are to be transmitted, for example.

The file managing unit 64 performs operations such as storing a file that is received and reading a file that is already stored, for example. The log managing unit 65 stores a log of the chat contents. The request query unit 66 makes a query to the relay server 11 regarding the presence/absence of a request to be processed. The request processing unit 67 processes a request based on the content of the request.

### <Process>

In the following, process operations of the information processing system 1 of the present embodiment are described in greater detail.

### «Device Registration»

In the information processing system 1 of the present embodiment, first, the smart device 13 that can access the file server 14 has to be registered. For example, in the information processing system 1 of the present embodiment, the smart device 13 that can access the file server 14 may be registered (paired) using a two-dimensional (2D) code in the following manner.

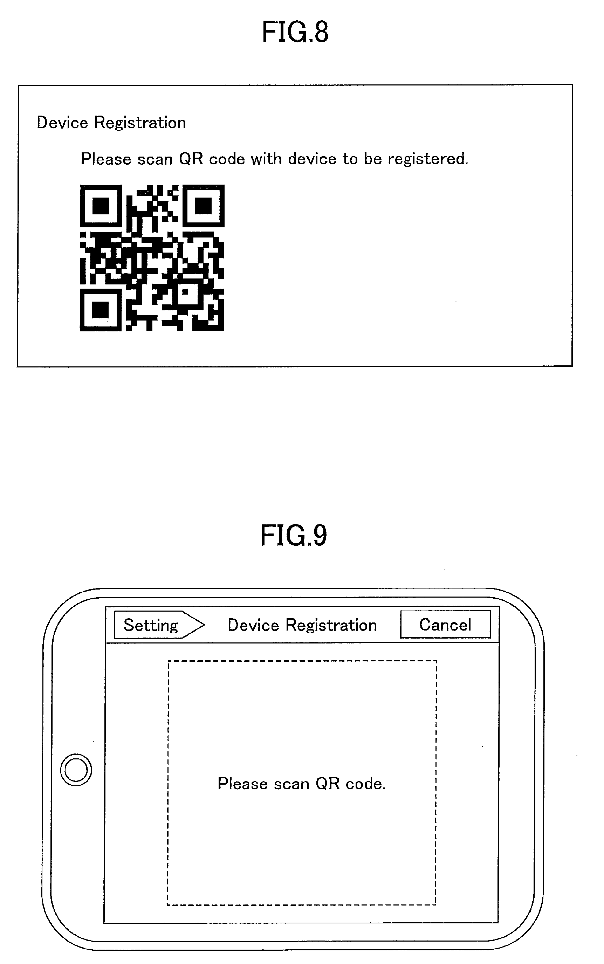

FIG. 8 illustrates an exemplary web user interface (UI) displaying a 2D code. In the web UI of FIG. 8, a 2D code such as a QR code (registered trademark) is displayed. To register a smart device 13 so that it that can access the file server 14, a user makes the smart device 13 scan the 2D code displayed on the web UI.

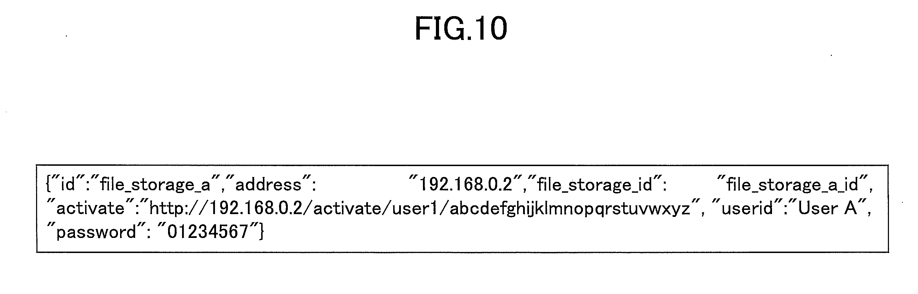

FIG. 9 illustrates an exemplary screen for scanning of a 2D code. The user can make the smart device 13 scan the 2D code by adjusting the position of the smart device 13 such that the 2D code captured by the smart device 13 is displayed within an area defined by dotted lines in the screen of FIG. 9. Note that the smart device 13 is registered regardless of whether the registration has to be performed via the relay server 11. By scanning the 2D code, the smart device 13 may acquire required information for accessing the file server 14 as illustrated in FIG. 10, for example.

Note that the web UI of FIG. 8 may be displayed by having a terminal apparatus operated by the user access an information processing apparatus such as the file server 14. Also, a printout of the 2D code may be used to scan the 2D code.

FIG. 10 illustrates an exemplary configuration of information that can be acquired from the 2D code. The information illustrated in FIG. 10 includes a unique ID and an IP address of the file server 14, an ID used upon making access via the relay server 11, and a link used for activation.

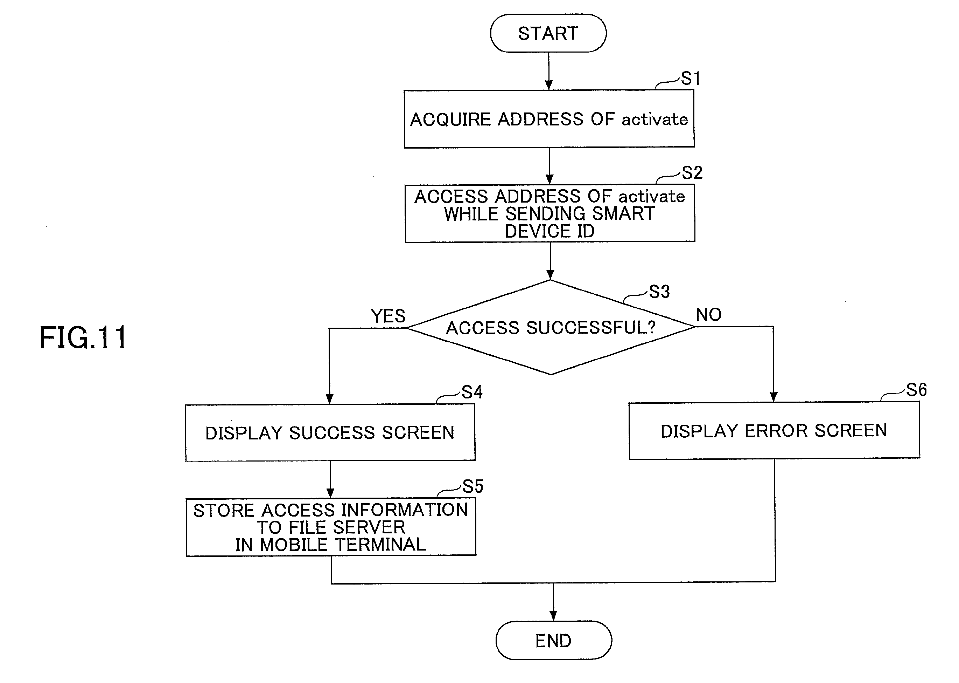

FIG. 11 is a flowchart illustrating an exemplary smart device registration process. In step S1, the smart device 13 acquires a link used for activation (address of "activate") from the information as illustrated in FIG. 10 that is acquired from scanning the 2D code as illustrated in FIG. 8, for example.

In step S2, the smart device 13 accesses the link used for activation (address of "activate") while sending the smart device ID of the smart device 13.

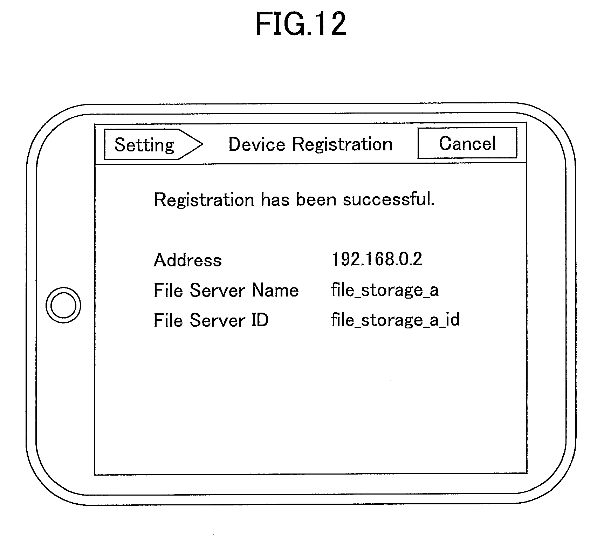

In step S3, the smart device 13 determines whether it has been able to successfully access the link used for activation and be registered in the file server 14. If the smart device 13 has successfully accessed the link used for activation and has been successfully registered with the file server 14, in step S4, the smart device 13 may display a success screen as illustrated in FIG. 12, for example.

FIG. 12 illustrates an exemplary success screen. The success screen of FIG. 12 displays a notification that the smart device 13 has been successfully registered, an IP address of the file server 14 with which the smart device 13 has been registered, and a file server name and a file server ID of the file server 14. After step S4, the process proceeds to step S5 where the smart device 13 stores the required information for accessing the file server 14 (access information to the file server 14). If the smart device 13 could not be registered with the file server 14 in step S3, the smart device 13 displays an error screen in step S6.

In the smart device registration process according to FIG. 11, the registration process is activated based on the address (link) for activation acquired from the 2D code, information relating to the smart device 13 is registered in the file server 14, and information relating to the file server 14 is registered in the smart device 13.

Note that the file server 14 does not allow access from smart devices 13 that have not undergone the smart device registration process as illustrated in FIG. 11. Thus, in order to use the file server 14, the smart device 13 has to undergo the smart device registration process as illustrated in FIG. 11. The smart device 13 that has undergone the smart device registration process may be able to acquire information or files stored in the file server 14.

### «Group Creation»

In the information processing system 1 according to the present embodiment, a group to which chat contents are to be delivered has to be created. For example, in the information processing system 1, a group to which chat contents are to be delivered may be created in the following manner.

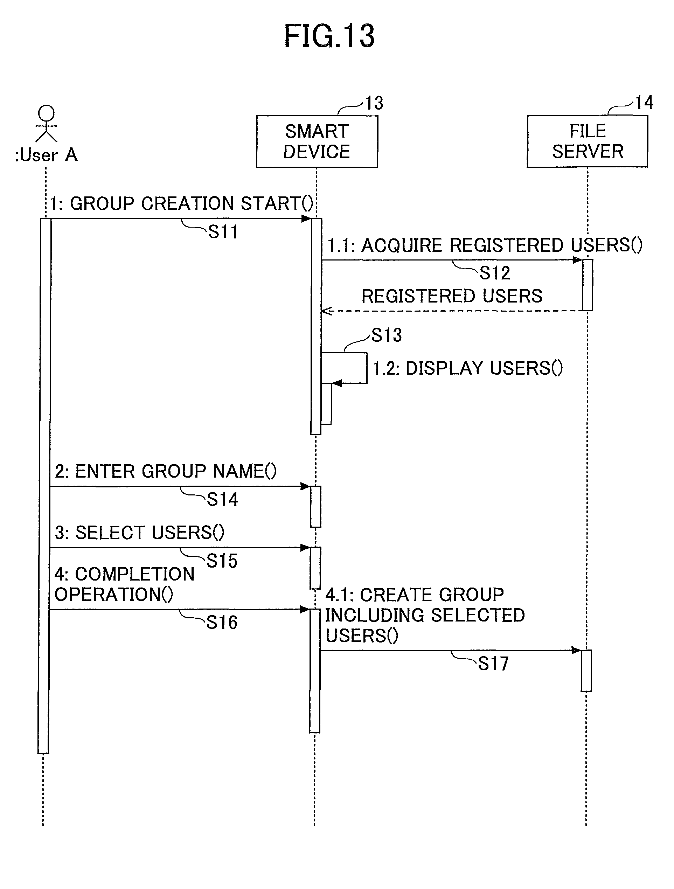

FIG. 13 is a sequence chart illustrating an exemplary group creation process. In step S11, a user (User A) operating the smart device 13 issues an instruction to the smart device 13 to start a group creation process. The process then proceeds to step S12 where the smart device 13 issues a request to the file server 14 to acquire information of registered users that are able to participate in a chat session. In turn, the file server 14 returns the information of the registered users to the smart device 13.

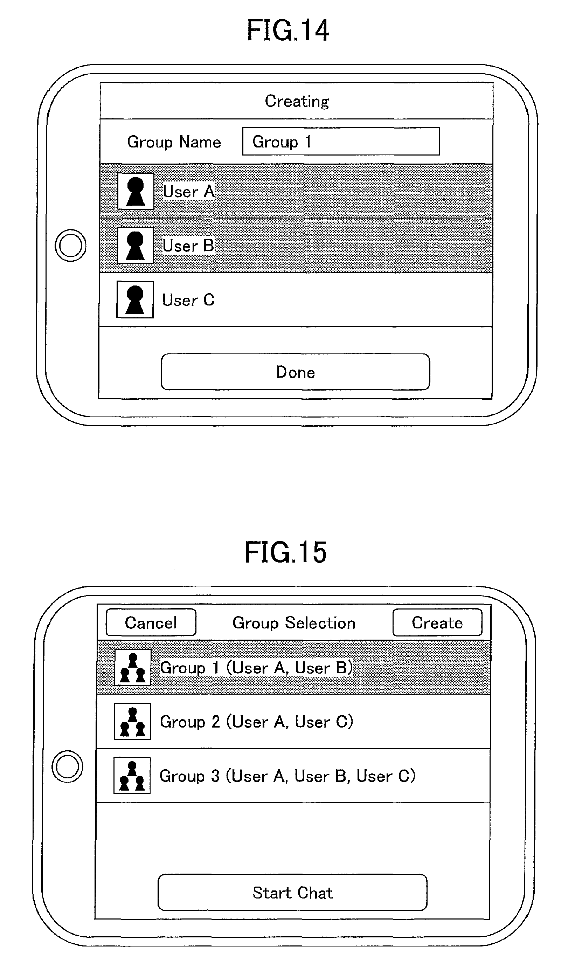

In step S13, the smart device 13 displays a group creation screen as illustrated in FIG. 14, for example, using the information of the registered users received in step S12. FIG. 14 illustrates an example of the group creation screen. The group creation screen is an example of a screen that is displayed on the smart device 13 for creating a group. The group creation screen of FIG. 14 includes a field for entering a group name and a field for selecting a user.

In step S14, the user operates the smart device 13 and enters a group name in the group creation screen. In step S15, the user operates the smart device 13 to select one or more users that are to join the group being created from users listed in the group creation screen. In step S16, the user operates the smart device 13 to perform a completion operation by pressing a "Done" button of the group creation screen, for example.

After the completion operation is performed by the user, the process proceeds to step S17 where the smart device 13 issues a request to the file server 14 to create a group using the group name entered in step S14 and the one or more users selected in step S15. In turn, the file server 14 that has received the group creation request creates a group using the group name entered in step S14 and the users selected in step S15, and manages the users belonging to the same group by associating the users with each other.

### «Chat Process»

In the information processing system 1 according to the present embodiment, a chat may be conducted between smart devices 13 belonging to a group in the manner described below. FIG. 15 illustrates an exemplary group selection screen for holding a group chat session. The user selects a group that is to hold a chat session from a group selection screen as illustrated in FIG. 15, for example, and presses a "Start Chat" button. Note that group information displayed on the group selection screen may be acquired from the file server 14. When the "Start Chat" button is pressed, the smart device 13 notifies the chat server 12 of the group selected from the group selection screen.

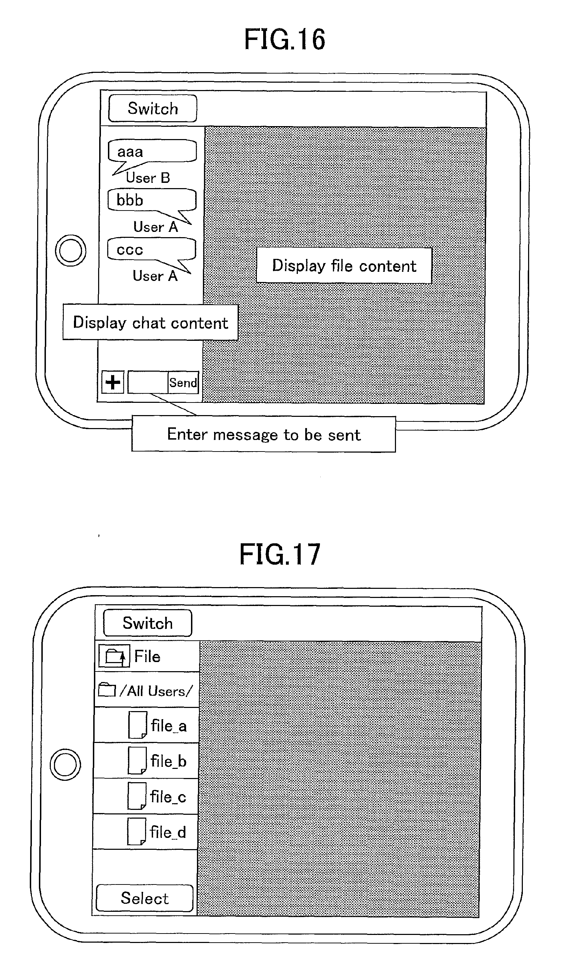

A chat screen as illustrated in FIG. 16, for example, may be displayed on the smart device 13 operated by a user belonging to a group of users that are to participate in a chat session. FIG. 16 illustrates an example of a chat screen.

The chat screen in FIG. 16 displays chat contents on the left side, and a box for entering a message to be transmitted below the portion displaying the chat contents. The chat screen of FIG. 16 also displays contents of a selected file (described below) on the right side.

When a "Switch" button at the top of the chat screen of FIG. 16 is pressed, the smart device 13 acquires a list of files from the file server 14 and displays a file selection screen as illustrated in FIG. 17, for example. FIG. 17 illustrates an example of a file selection screen.

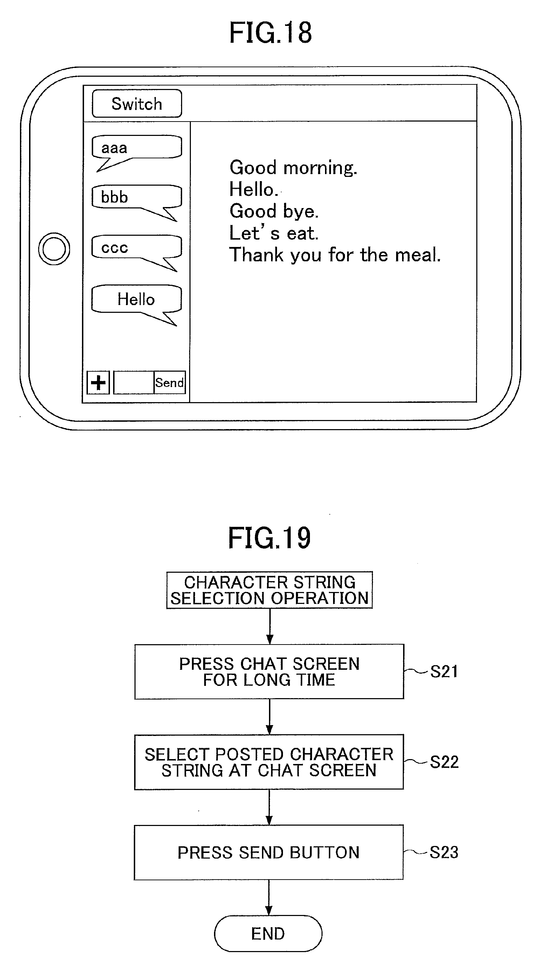

The file selection screen of FIG. 17 displays a list of files on the left side. The user may select a file from the list of files and press a "Select" button to have the contents of the selected file displayed. When a file is selected and the "Select" button is pressed, the smart device 13 acquires the selected file from the file server 14 and displays a chat screen as illustrated in FIG. 18, for example.

FIG. 18 illustrates an example of a chat screen displaying the contents of a file. The chat screen of FIG. 18 has the contents of the file selected from the file selection screen of FIG. 17 displayed on the right side of the chat screen of FIG. 16.

Note that in some embodiments, the chat screen of FIG. 18 may include a file sharing button for sharing the display of the file contents with another smart device 13 operated by another user belonging to the group, for example. In this case, when the user presses the file sharing button, the smart device 13 may notify the other smart device 13 operated by the other user in the group of the file being displayed such that the display of the file contents may be shared with the other smart device 13.

Also, in some embodiments, rather than using the file sharing button, the smart device 13 may send a message including a link to the file being displayed to the other smart device 13 operated by the other user in the group, for example.

In the present embodiment, when the chat screen displaying the contents of a file as illustrated in FIG. 18 is displayed, the user may perform a character string selection operation for selecting a character string from the chat contents being displayed. FIG. 19 is a flowchart illustrating an exemplary character string selection operation.

In a chat screen displaying contents of a file, the user may perform a character string selection operation on a portion of the screen displaying chat contents, and if the selected character string is included in the contents of the file, the selected character string may be highlighted and displayed in a fluorescent color, for example. Note that displaying the selected character string in highlighted display mode using a fluorescent color is merely one example, and other display modes may be used to make the selected character string visually distinguishable.

In step S21, the user may press the chat screen for a long time to prompt the display unit 21 of the smart device 13 to switch to selection mode. After the display unit 21 is switched to the selection mode, the user may be able to select a character string (posted character string) from the chat contents being displayed. In step S22, the user selects a posted character string at the chat screen, and in step S23, the user presses a "Send" button provided at the lower side of the portion displaying the chat contents.

When the "Send" button is pressed, the data transmitting unit 27 of the smart device 13 delivers information of the character string selected by the user to the other smart device 13 operated by the other user in the group via the chat server 12.

Note that the information of the character string selected by the user is described in detail below. By having the information of the character string selected by the user delivered via the chat server 12, the smart devices 13 operated by the users belonging to the group holding the chat session may display the selected character string in highlighted display mode, provided the selected character string is included in the contents of the file.

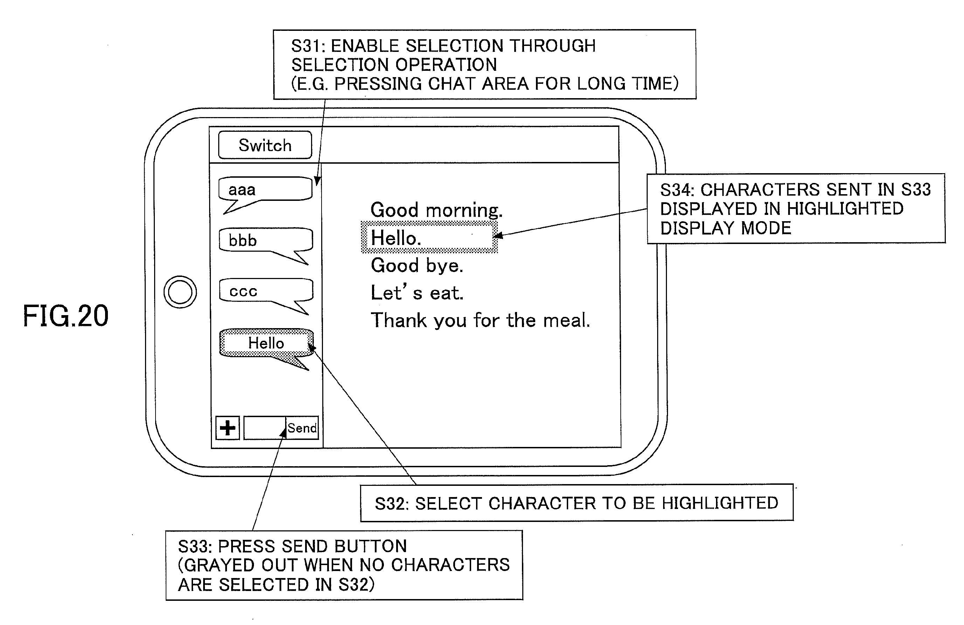

FIG. 20 illustrates an example of a chat screen including a highlighted display. In step S31, the user may direct the switch to selection mode for enabling selection of a character string to be highlighted by performing an operation such pressing a portion displaying chat contents (chat area) for a long time, for example. In turn, the display unit 21 of the smart device 13 may switch to selection mode.

In step S32, the user selects a character string to be highlighted. In the present example, it is assumed that the user has selected the character string "Hello" from the chat contents displayed. Note that the display unit 21 of the smart device 13 21 may display the character string "Hello" selected at the chat area in highlighted display mode, for example.

In step S33, the user presses the "Send" button provided below the chat area. Note that the display unit 21 of the smart device 13 may display the "Send" button in grayed-out display mode when no character strings are selected in step S32, for example.

In step S34, if the character string "Hello" selected by the user is included in the contents of the file as illustrated in FIG. 20, the display unit 21 of the smart device 13 displays the character string "Hello" within the contents of the file being displayed in highlighted display mode.

Also, when the "Send" button is pressed in step S33, the text information generating unit 30 of the smart devices 13 generates information of the character string "Hello" selected by the user. The data transmitting unit 27 of the smart device 13 then delivers the information of the character string "Hello" selected by the user to the other smart device 13 operated by the other user in the group via the chat server 12.

Thus, in a case where the same file is opened at the smart device 13 that has been operated by the user to select a character string and the other smart device 13 that is operated by the other user of the group holding the chat session, the character string "Hello" included the contents of the file displayed at the other smart device 13 may be displayed in highlighted display mode.

Note that the user may perform a similar selection operation once more to select a character string different from the character string "Hello" from the chat contents to display a character string different from the character string "Hello" in highlighted display mode. Also, the user may press the "Send" button without selecting a character string from the chat contents to end the display in highlighted display mode, for example.

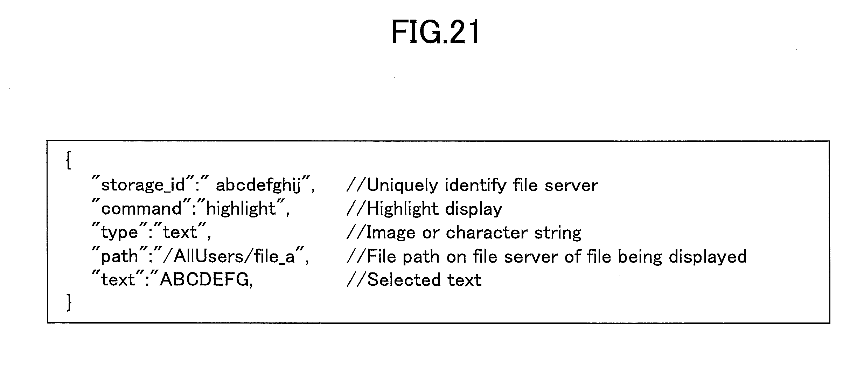

FIG. 21 illustrates an exemplary configuration of information of a character string selected by the user. The information of the character string selected by the user illustrated in FIG. 21 includes the information items "file server ID", "command", "type", "file path", and "text".

The file server ID is information uniquely identifying the file server 14. The command is information for causing a display to be visually distinguishable such as highlighting. The type is information indicating whether an image or a character string is selected. The file path is information indicating a path on the file server 14 of the file being displayed on the right side of the chat screen. The text is information indicating the character string that has been selected from the chat contents.

Note that a file selected in the present embodiment corresponds to a file that is described in an electronic document format such as PDF or an application format that enables distinction between an image and text.

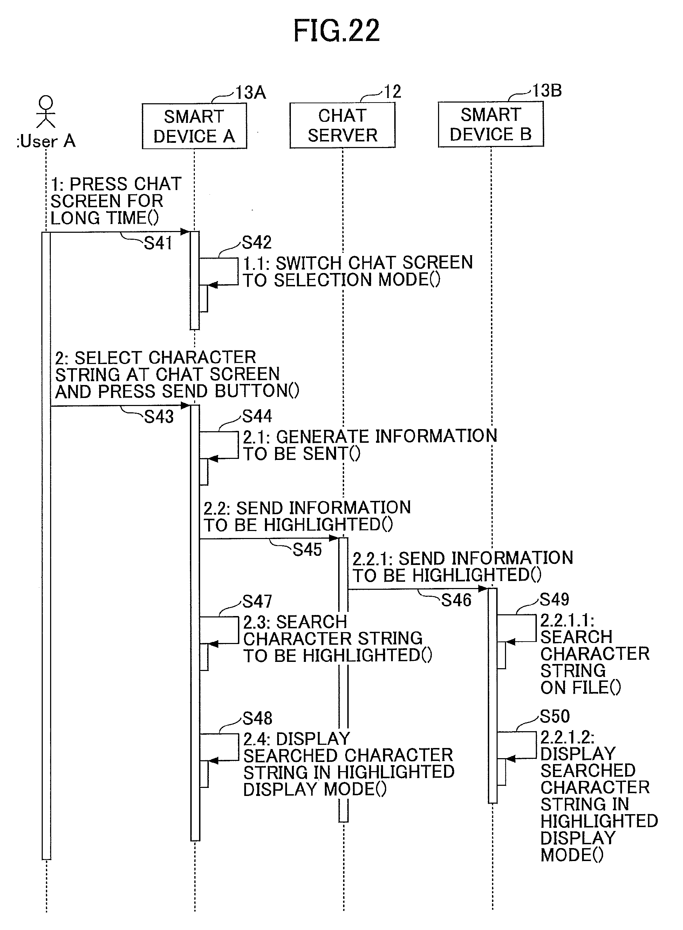

FIG. 22 is a sequence chart illustrating an exemplary highlighting process implemented by the information processing system 1 of the present embodiment. In step S41, a user (User A) operating a smart device 13A may perform an operation such as pressing a chat area of a chat screen displayed by the display unit 21 of the smart device 13A for a long time, for example, to prompt the display unit 21 to switch to selection mode.

In step S42, the display unit 21 of the smart device 13A switches the chat screen to selection mode. In step S43, the user operating the smart device 13A selects a character string from chat contents that are displayed at the chat area and presses the "Send" button.

When the "Send" button is pressed, in step S44, the text information generating unit 30 of the smart device 13A generates information of the character string selected by the user. In step S45, the data transmitting unit 27 of the smart device 13A transmits the information of the character string selected by the user to the chat server 12. In step S46, the chat server 12 delivers the information of the character string selected by the user to a smart device 13B operated by a user (User B) belonging to the group holding the chat session.

In step S47, the display unit 21 of the smart device 13A searches contents of a file displayed on the chat screen of the smart device 13A to determine whether the character string selected by the user is included in the contents of the file displayed. In step S48, the smart device 13A displays the character string selected by the user in highlighted display mode if the character string selected by the user is included in the file contents displayed on the chat screen of the smart device 13A.

Also, in step S49, the display unit 21 of the smart device 13B searches contents of a file displayed on the chat screen of the smart device 13B to determine whether the character string selected by the user is included in the contents of the files displayed. In step S50, the smart device 13B displays the character string selected by the user in highlighted display mode if the character string selected by the user is included in the contents of the files displayed on the chat screen of the smart device 13B.

According to the information processing system 1 of the present embodiment, in a case where chat contents and contents of a selected file are displayed on a chat screen and a character string selected at the chat area of the chat screen is included in the file contents being displayed, the character string selected from the chat area may be displayed in highlighted display mode. Thus, according to an aspect of the information processing system 1 of the present embodiment, the chat contents and the contents of the file being displayed on the chat screen may be linked to each other.

Therefore, the user operating the smart device 13 may easily submit comments and remarks on a file being shared with other users belonging to a group that is holding a chat session (members of the group participating in the chat session) and contents thereof may be shared in real time with the users.

### [Second Embodiment]

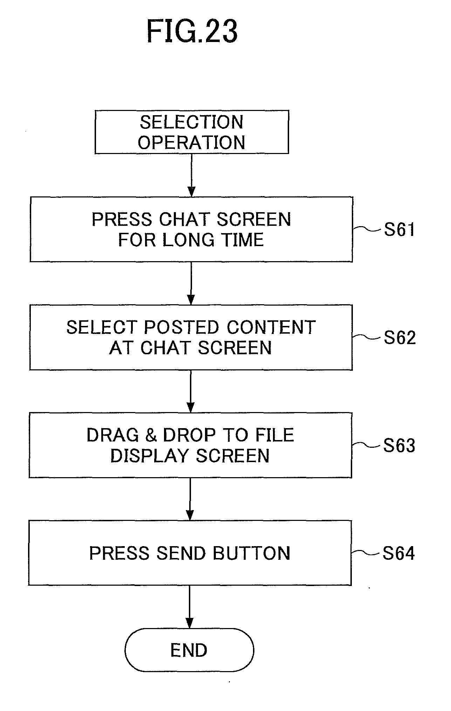

According to a second embodiment of the present invention, the information processing system 1 implements a selection operation as illustrated in FIG. 23 in place of the character string selection operation of the information processing system 1 according to the first embodiment as illustrated in FIG. 19. FIG. 23 is a flowchart illustrating an exemplary selection operation.

According to the present embodiment, a user may perform a selection operation to select a content (e.g. character string or image) at a portion displaying chat contents of a chat screen that displays the chat contents and contents of a file, and in this way, the selected content may be displayed at the portion displaying the file contents (file area).

In step S61, the user may press the chat screen for a long time, for example, to have the display unit 21 of the smart device 13 switch to selection mode. After the switch to selection mode, the user will be able to select content (posted content) such as a character string or an image from chat contents displayed on the chat screen.

In step S62, the user selects a posted content at the chat screen. In step S63, the user may drag and drop the selected posted content from the chat area to the file area of the chat screen and designate a position within the file area at which the selected content is to be displayed.

In step S64, the user presses the "Send" button provided below the chat area. When the "Send" button is pressed, the data transmitting unit 27 of the smart device 13 delivers information of the content selected by the user to another smart device 13 operated by another user in the group holding the chat session via the chat server 12. Information of the content selected by the user may include an image and image position information, for example.

Note that the information of the content selected by the user is described in greater detail below. By having the information of the content selected by the user delivered via the chat server 12, the other smart device 13 operated by the other user in the group holding the chat session may display the content selected by the user within the file area at the position designated by the user.

Thus, one or more smart devices 13 operated by one or more users belonging to a group holding a chat session may display a content selected by a user at a position within a file area designated by the user.

Note that the user may perform a similar selection operation once more to select a different posted content from the chat area and additionally display the different posted content at a position within the file area designated by the user. Also, the user may press the "Send" button without selecting any content from the chat area to thereby terminate the display of posted content within the file area, for example.

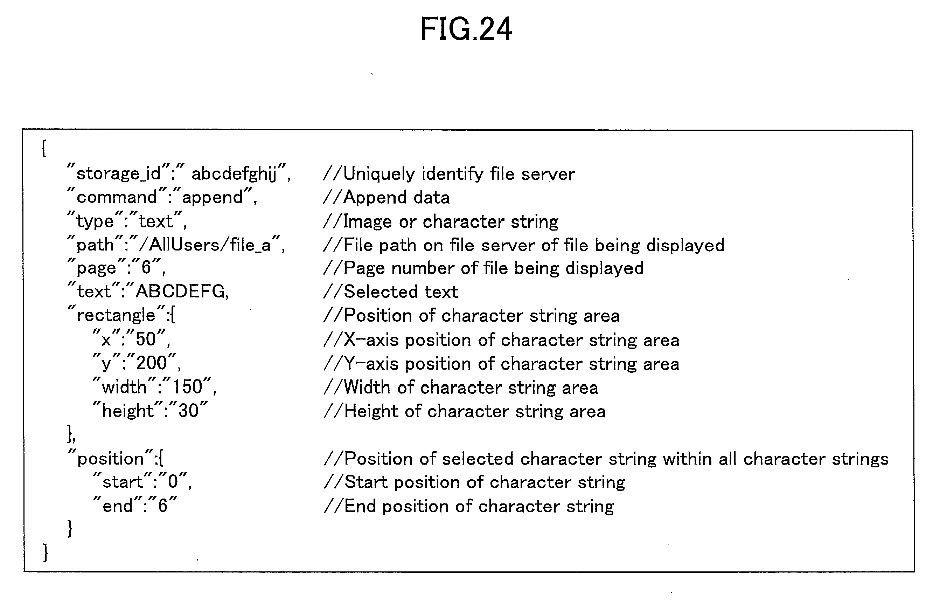

FIG. 24 illustrates an exemplary configuration of image position information included in the information of the content selected by the user. The image position information illustrated in FIG. 24 includes information items such as file server ID ("storage ID"), "command", "type", file path ("path"), page number ("page"), the selected character string or image ("text"), the designated area for the selected text or image ("rectangle"), and a position of the text or image ("position"). Note that FIG. 24 illustrates an example of image position information in a case where a character string is selected.

The file server ID is information for uniquely identifying the file server 14. The command is information for promoting an operation such as appending data and the like. The type is information indicating whether an image or a character string has been selected. The file path is information indicating the path on the file server 14 of the file being displayed on the right side of the chat screen. The page number is information indicating the page number of the file being displayed on the right side of the chat screen.

The selected character string or image is information indicating the character string or image that has been selected from the chat contents displayed at the chat area. The designated area for the selected character string or image is information indicating the position within the file area to which the selected content has been dragged and dropped by the user. The position of the selected character string or image is information indicating the position of the character string or image corresponding to the posted content selected by the user.

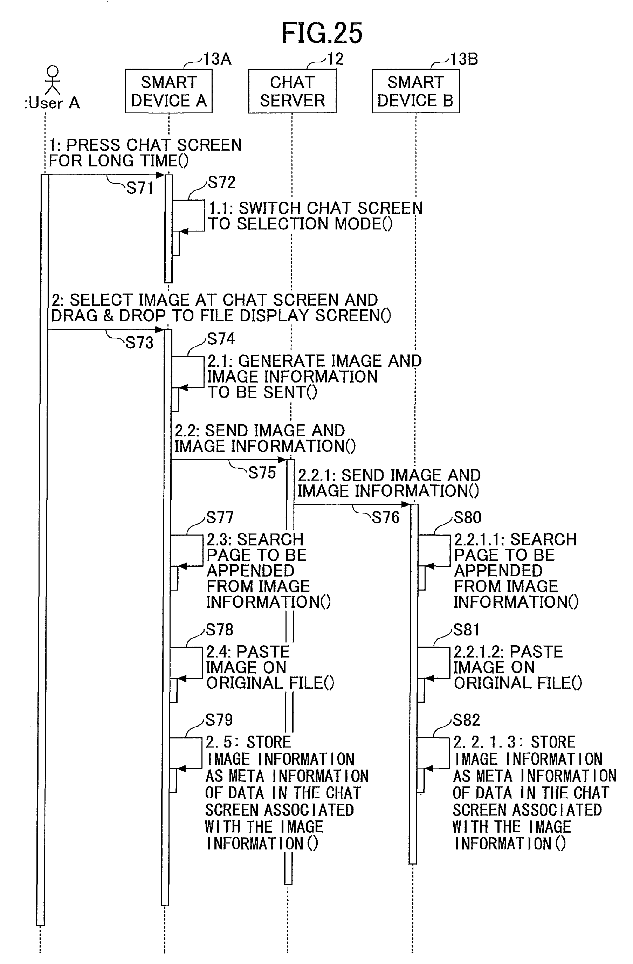

FIG. 25 is a sequence chart illustrating an exemplary appending display process implemented by the information processing system of the present embodiment. In step S71, the user (User A) operating the smart device 13A may perform an operation such as pressing the chat area of the chat screen for a long time to prompt the switch to selection mode.

In step S72, the display unit 21 of the smart device 13A switches the chat screen to selection mode. In step S73, the user operating the smart device 13A selects an image from the chat screen as an example of posted content, drags and drops the selected image from the chat area to the file area, and presses the "Send" button.

After the "Send" button is pressed, in step S74, the image information generating unit 24 of the smart device 13A generates image position information of the image selected by the user. The image generating unit 25 generates an image based on the image position information. In step S75, the data transmitting unit 27 of the smart device 13A sends the image and the image position information to the chat server 12 as information of the content selected by the user.

In step S76, the chat server 12 delivers the image and the image position information corresponding to exemplary information of the content selected by the user to another smart device 13B operated by another user in the group holding the chat session, for example.

In step S77, the display unit 21 of the smart device 13A searches for a page of the file to which the selected image is to be appended based on the image position information. In step S78, the display unit 21 of the smart device 13A pastes the image included in the information of the content selected by the user to the searched-out page of the file.

In step S79, the display unit 21 of the smart device 13A stores the image position information as meta information associating the pasted image with the corresponding image and/or character string displayed in the chat area. For example, the display unit 21 of the smart device 13A may have the image and/or character string in the chat area associated with the pasted image displayed as a hyperlink or in some other visually distinguishable display mode.

Also, in step S80, the display unit 21 of the smart device 13B searches for a page of the file to which the selected image is to be appended based on the image position information. In step S81, the display unit 21 of the smart device 13B pastes the image included in the information of the content selected by the user to the searched-out page of the file.

In step S82, the display unit 21 of the smart device 13B stores the image position information as meta information associating the pasted image with the corresponding image and/or character string in the chat area. For example, the display unit 21 of the smart device 13B may have the image and/or character string in the chat area displayed as a hyperlink or in some other visually distinguishable display mode.

In the information processing system 1 according to the present embodiment, chat contents and contents of a selected file may be displayed on a chat screen, and a content selected from the chat area may be appended to the contents of the file displayed in the file area. According to an aspect of the information processing system 1 of the present embodiment, chat contents and file contents displayed on a chat screen may be linked to each other.

Therefore, the user operating the smart device 13 can easily submit comments and remarks on a file being shared by users of a group holding a chat session (members of the group participating in the chat session) and contents thereof may be shared in real time with the users.

### [Third Embodiment]

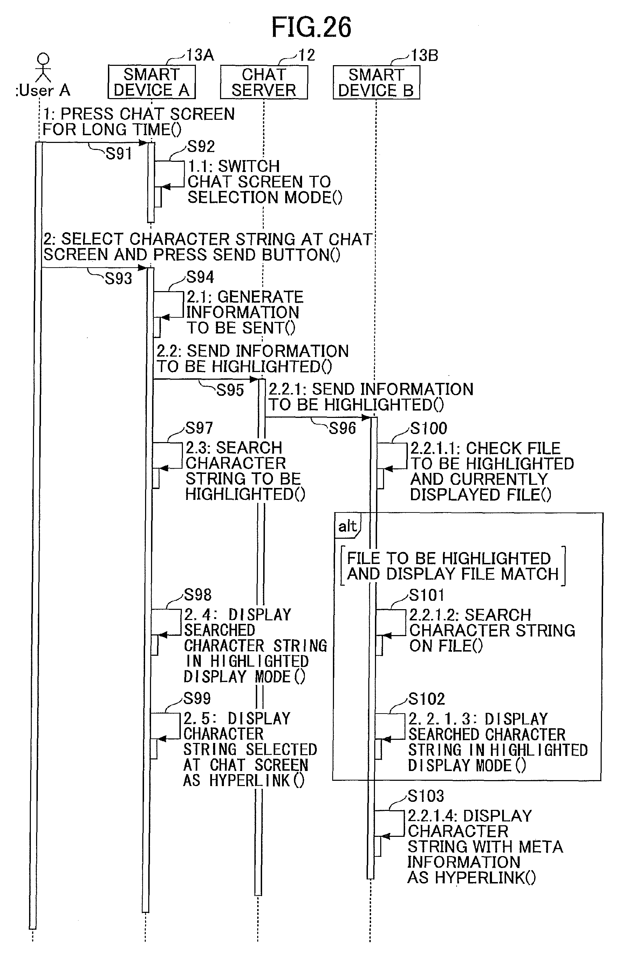

According to a third embodiment of the present invention, the information processing system 1 implements a highlighting process as illustrated in FIG. 26 in place of the highlighting process of the information processing system 1 according to the first embodiment as illustrated in FIG. 22. Note that although an example is described below in which the process sequence as illustrated in FIG. 26 is implemented in place of the process sequence according to the first embodiment as illustrated in FIG. 22, the present embodiment may similarly be implemented in the information processing system 1 according to the second embodiment described above, for example.

FIG. 26 is a sequence chart illustrating an exemplary highlighting process implemented by the information processing system 1 according to the present embodiment. Note that the processes of steps S91-S98 of FIG. 26 may be substantially identical to steps S41-S48 of FIG. 22, and as such, descriptions thereof are omitted.

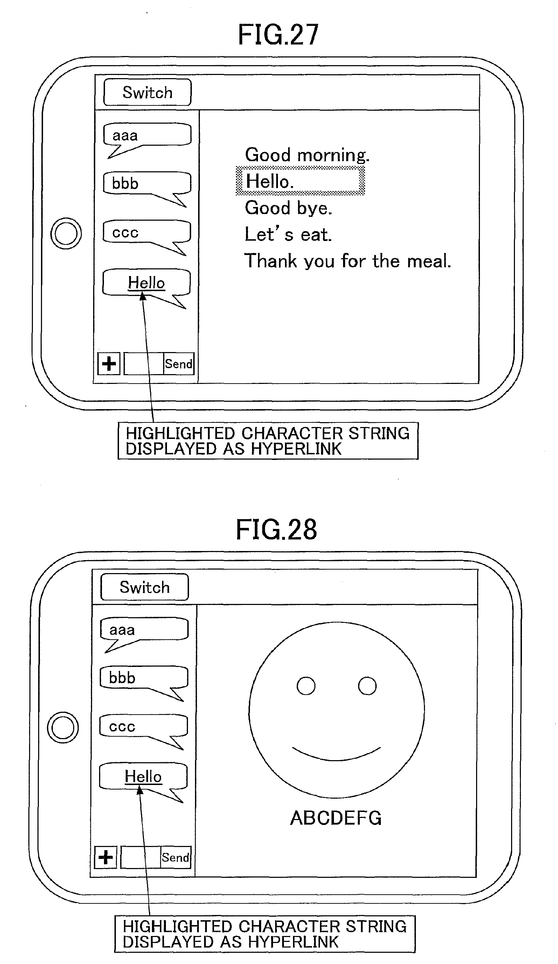

In step S99, the display unit 21 of the smart device 13A displays a character string selected at the chat area by the user in step S93 as a hyperlink as illustrated in FIG. 27, for example. FIG. 27 illustrates an example of a chat screen displaying a selected content as a hyperlink. In the chat screen illustrated in FIG. 27, a character string selected from the chat contents displayed in the chat area of the chat screen is included in the contents of a file displayed in the file area, and accordingly, the corresponding character string in the file area is displayed in highlighted display mode. Also, in the chat screen illustrated in FIG. 27, the character string selected at the chat area by the user in step S93 is displayed as a hyperlink.

In step S100, the display unit 21 of the smart device 13B checks the file that is currently displayed at the chat screen and the file including the content to be highlighted. If it is determined that the file that is currently displayed at the chat screen matches the file including the content to be highlighted, the display unit 21 of the smart device 13B starts processes from step S101 and onward.

In step S101, the display unit 21 of the smart device 13B searches the contents of the file being displayed to determine whether the character string selected by the user is included in the contents of the file being displayed at the chat screen. If the character string selected by the user is included in the contents of the file displayed at the chat screen, in step S102, the smart device 13B displays the corresponding character string included in the contents of the file in highlighted display mode, as illustrated in FIG. 27, for example.

Also, in step S103, the display unit 21 of the smart device 13B displays the character string selected at the chat by the user in step S93 as a hyperlink as illustrated in FIG. 27, for example.

On the other hand, if the file that is currently displayed at the chat screen and the file including the content to be highlighted do not match, unless the file to display highlight match, the display unit 21 of the smart device 13B skips the processes of step S101 and S102, and performs the process of step S103. For example, in step S103, the display unit 21 of the smart device 13B may display the character string selected at the chat area by the user in step S93 as a hyperlink as illustrated in FIG. 28, for example.

FIG. 28 illustrates another example of a chat screen displaying selected content as a hyperlink. In FIG. 28, contents of a selected file displayed at the file area of the chat screen does not include a character string selected by the user at the chat area, and accordingly, contents displayed in the file area are not highlighted. Also, in the chat screen of FIG. 28, the character string selected at the chat area by the user in step S93 is displayed as a hyperlink.

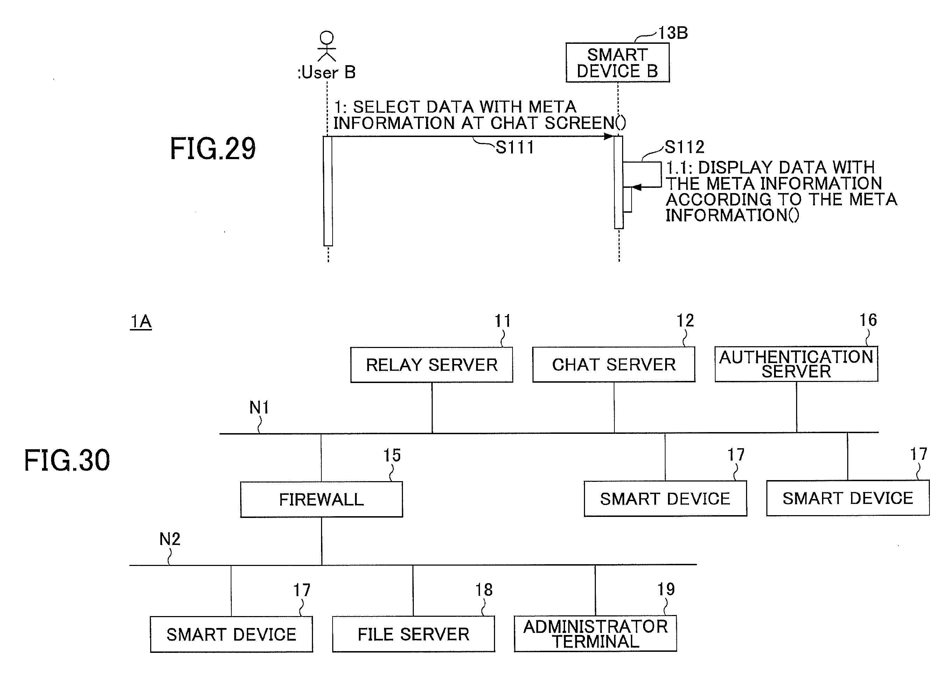

Note that in the chat screen of FIG. 28, when the character string displayed as a hyperlink within the chat area is selected, the display unit 21 of the smart device 13B may perform a process as illustrated in FIG. 29, for example.

FIG. 29 is a sequence chart illustrating an exemplary process that may be implemented when a character string within a chat area displayed as a hyperlink is selected. In step S111, the user operating the smart device 13B selects a character string within a chat area that is displayed as a hyperlink to acquire image position information stored as meta information of the character string.

In step S112, based on the acquired image position information, the display unit 21 of the smart device 13B opens the file including the content to be highlighted, and displays the character string selected by the user included in the contents of the opened file in highlighted display mode as illustrated in FIG. 27.

Note that the character strings displayed as hyperlinks in FIGS. 27 and 28 may correspond to a character string selected at the chat area by the user in step S93 or a separate message that is newly created, for example. Also, aspects of the present embodiment may similarly be applied to a case where a user drags and drops a selected content such as an image or a character string from the chat area to the file area, for example.

Note that the character string to be highlighted or the character string or image that is dragged and dropped to be appended to contents of a file as an image may be displayed as a hyperlink in a visually distinguishable manner, for example. Also, in the information processing system 1 according to the present embodiment, when terminating the display of posted contents on the file area, a content that was highlighted or a character string or image that was appended to the file content may be stored as a separate file, for example.

In the information processing system 1 according to the present embodiment, chat contents and contents of a selected file may be displayed on a chat screen, and meta information may be attached to a character string or image selected at the chat area. Thus, in the information processing system 1 according to the present embodiment, even when a file that is currently displayed on the chat screen does not correspond to a file including content to be highlighted or a file to which a selected character string or image is to be appended, the file including the content to be highlighted or the file to which the character string or image is to be appended may be easily displayed based on the meta information.

Thus, the user operating the smart device 13 may easily submit comments and remarks on a file that is shared by users belonging to a group holding a chat session (members participating in the chat session) and contents thereof may be shared in real time with the users.

### [Fourth Embodiment]

In the embodiments described above, activation is performed based on an address used for activation acquired from a 2D code, the smart device 13 is registered with the file server 14, and information of the file server 14 is registered in the smart device 13. A fourth embodiment of the present invention relates to registering (pairing) a smart device with a file server in a case where the smart device is outside the network N2 and cannot directly access the network N2.

### <System Configuration>

FIG. 30 illustrates another exemplary configuration of an information processing system 1A according to an embodiment of the present invention. In FIG. 30, the information processing system 1A includes the relay server 11, the chat server 12, the FW 15, an authentication server 16, a smart device 17, a file server 18, and an administrator terminal 19. Note that elements of the information processing system 1A of FIG. 30 that may be substantially identical to the elements of the information processing system 1 of FIG. 1 are given the same reference numbers and their descriptions are omitted.

In the information processing system 1A, the relay server 11, the chat server 12, the authentication server 16, and at least a part of the smart devices 17 are connected to the network N1. Also, at least a part of the smart devices 17, the file server 18, and the administrator terminal 19 are connected to the network N2. The network N1 and the network N2 are interconnected via the FW 15.

Note that the relay server 11 and the chat server 12 may be identical to those illustrated in FIG. 1, and accordingly, descriptions thereof are omitted. The authentication server 16 may be an authentication station, for example. The authentication server 16 is configured to issue a certificate. The smart device 17 corresponds to the smart device 13 of FIG. 1 that has an additional function related to device registration using a certificate as described in detail below. The file server 18 corresponds to the file server 14 of FIG. 1 that has an additional function relating to device registration using a certificate as described in detail below.

The administrator terminal 19 is an example of a terminal apparatus that is used by an administrator. The administrator terminal 19 may be a smartphone, a tablet terminal, a mobile phone, a desktop PC, a notebook PC, or any other type of device that can be operated by a user. Note that the configuration of the information processing system 1A of FIG. 30 is merely one example, and other various system configurations may be implemented according to their intended use or purpose.

### <Hardware Configuration>

The relay server 11, the chat server 12, the authentication server 16, the file server 18 and the administrator terminal 19 may be implemented by computers having a hardware configuration as illustrated in FIG. 2, for example. The smart device 17 may have a hardware configuration as illustrated in FIG. 3, for example. Since the hardware configurations of the above elements may be identical to those described above with reference to FIGS. 2 and 3, descriptions thereof are omitted.

### <Software Configuration>

### «Smart Device»

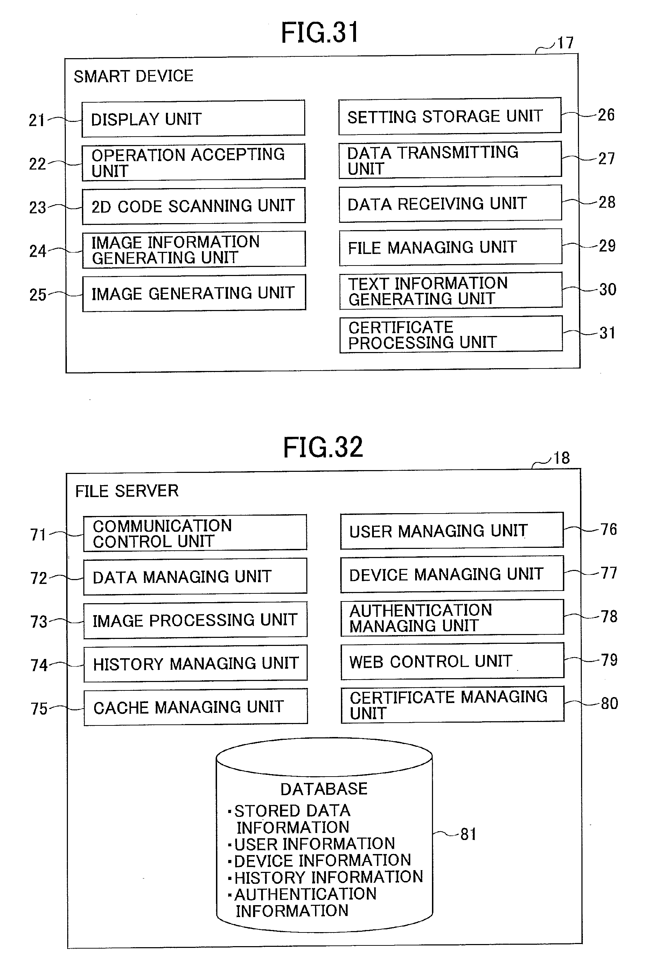

The smart device 17 according to the present embodiment may have a functional configuration as illustrated in FIG. 31, for example. FIG. 31 is a block diagram illustrating an exemplary functional configuration of the smart device 17 according to the present embodiment. As illustrated in FIG. 31, the smart device 17 includes a certificate processing unit 31 in addition to the elements of the smart device 13 as illustrated in FIG. 4. The certificate processing unit 31 is configured to perform device registration using a certificate that has been downloaded from the authentication server 16.

### «File Server»

The file server 18 according to the present embodiment may have a functional configuration as illustrated in FIG. 32, for example. FIG. 32 is a block diagram illustrating an exemplary configuration of the file server 18 according to the present embodiment.

The file server 18 may execute a relevant program to implement the functions of a communication control unit 71, a data managing unit 72, an image processing unit 73, a history managing unit 74, a cache managing unit 75, a user managing unit 76, a device managing unit 77, an authentication managing unit 78, a web control unit 79, a certificate managing unit 80, and a database 81, for example.

The communication control unit 71 enables cooperation with the smart device 17 using HTTP(S) or SMB, for example. The data managing unit 72 manages data in the file server 18. The image processing unit 73 performs operations such as converting data into a file format that can be handled by the smart device 17 and performing an OCR process on an input image to create a PDF file with text information, for example.

The history managing unit 74 manages histories of processes executed at the file server 18 and accesses made by the smart devices 17, for example. The cache managing unit 75 manages cache data for reducing a response time when access is made by the smart device 17. The user managing unit 76 manages users that are allowed to access the file server 18. The device managing unit 77 manages smart devices 17 that are allowed to access the file server 18. The authentication managing unit 78 manages authentication processes performed upon user authentication and device registration, for example.

The web control unit 79 performs processes associated with a management tool or a web API (application programing interface) of the file server 18, for example. The certificate managing unit 80 performs processes such as checking a certificate when device registration is performed using the certificate, for example. The database 81 retains information such as stored data information, user information, device information, history information, and authentication information.

### <Process>

In the following, process operations of the information processing system 1A according to the present embodiment are described in greater detail.

### «Device Registration»

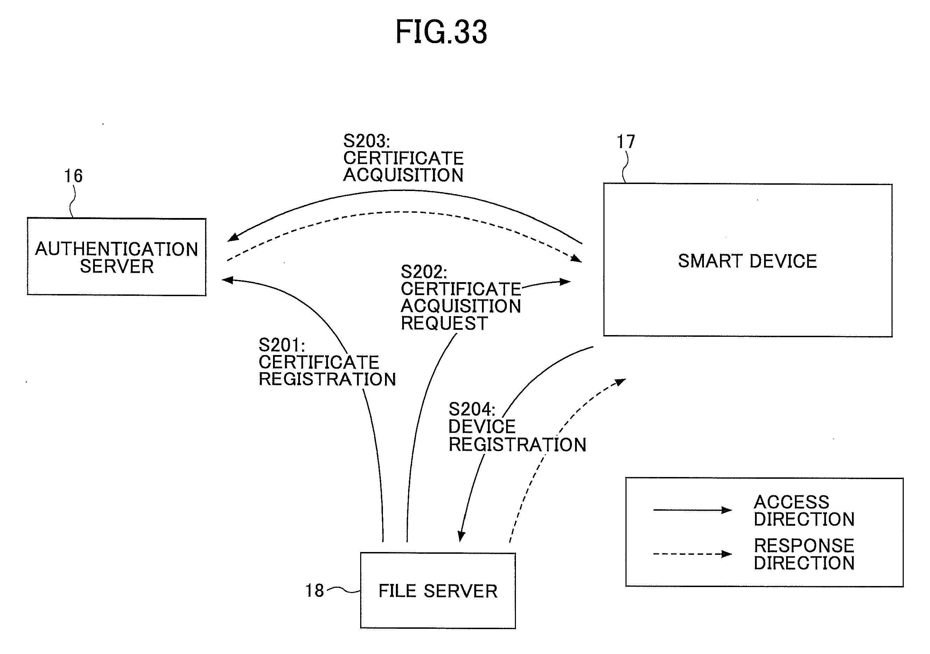

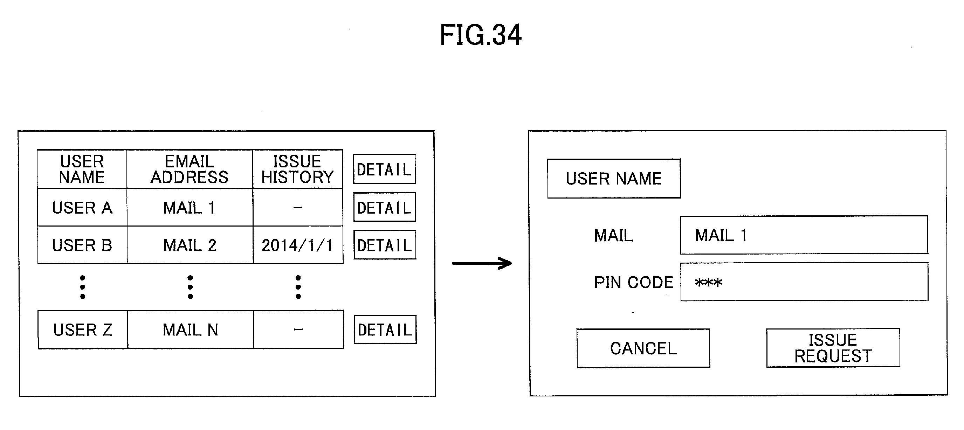

FIG. 33 illustrates an exemplary device registration process using a certificate. For example, a user of a smart device 17 that wishes to register (pair) the smart device 17 with the file server 18 while outside the network N2 may contact an administrator by phone or email to request for device registration of the smart device 17. In turn, the administrator may operate the administrator terminal 19 to send a certificate issue request to the file server 18. For example, the administrator may operate the administrator terminal 19 to access a management tool (web UI) of the file server 18 using a browser and prompt the administrator terminal 19 to display a web UI as illustrated in FIG. 34, for example.

FIG. 34 illustrates an exemplary web UI provided by a management tool of the file server 18. Note that the screen illustrated on the left side of FIG. 34 is an example of a user selection screen for selecting a user that is to perform registration (pairing) of the smart device 17. When a user is selected from the user selection screen of FIG. 34, the web UI displayed at the administrator terminal 19 is switched to a screen illustrated on the right side of FIG. 34. The screen on the right side of FIG. 34 is an example of a screen for entering an email address of the selected user and a PIN code to request for the issuance of a certificate. Note that the PIN code is information known to both the administrator and the user, and in some embodiments, a password of the user may be used, for example.

In step S201 of FIG. 33, the file server 18 that receives the certificate issue request from the administrator registers information for certificate issuance in the authentication server 16 and requests the authentication server 16 to issue a certificate. The information for certificate issuance may include a onetime key, a PIN code, and other information required for device registration, for example. The file server 18 receives URL information for downloading the certificate (download URL) from the authentication server 16 as information for acquiring the certificate.

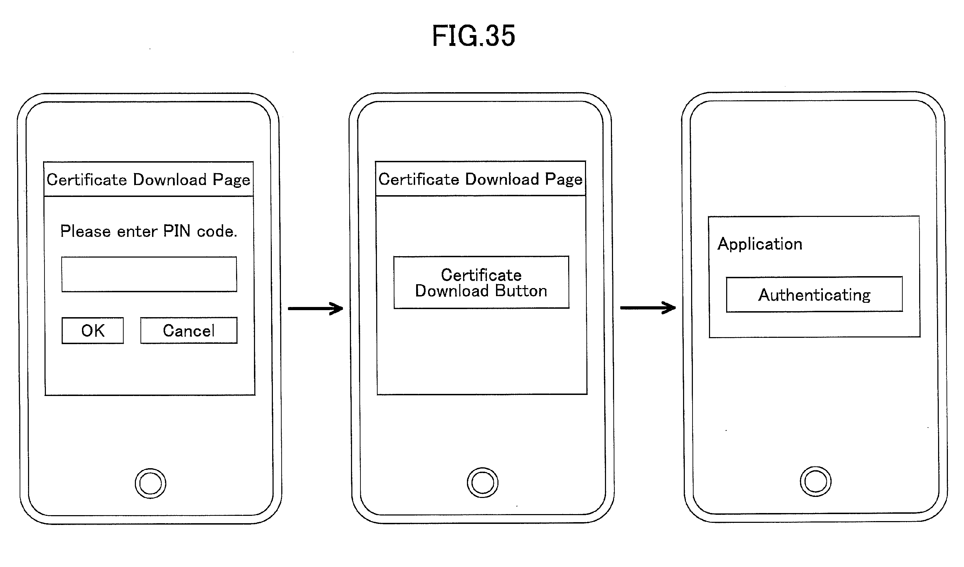

In step S202, the file server 18 sends the download URL to the smart device 17 by email, for example. In step S203, the user that has acquired the download URL via email or the like operates the smart device 17, accesses the download URL, and logs into a certificate download page as illustrated in FIG. 35, for example.

FIG. 35 illustrates exemplary screen images of the certificate download page. The screen illustrated at the left side of FIG. 35 is an example of a login screen for performing a login process using a PIN code. The authentication server 16 authenticates the user based on the PIN code entered in the login screen of FIG. 35.

After successfully logging into the certificate download page, the screen displayed at the smart device 17 is switched to a screen illustrated at the center of FIG. 35, for example. When a "Certificate Download Button" of the screen at the center of FIG. 35 is pressed, an application for cooperating with the file server 18 is started at the smart device 17, and the screen displayed at the smart device 17 is switched to a screen as illustrated at the right side of FIG. 35, for example.

The smart device 17 downloads the certificate from the authentication server 16. In step S204, the smart device 17 sends a device registration request to the file server 18 to be registered (paired) using the certificate. The file server 18 performs authentication of the smart device 17 based on the certificate (authentication upon device registration) and registers the smart device 17 upon successfully authenticating the smart device 17.

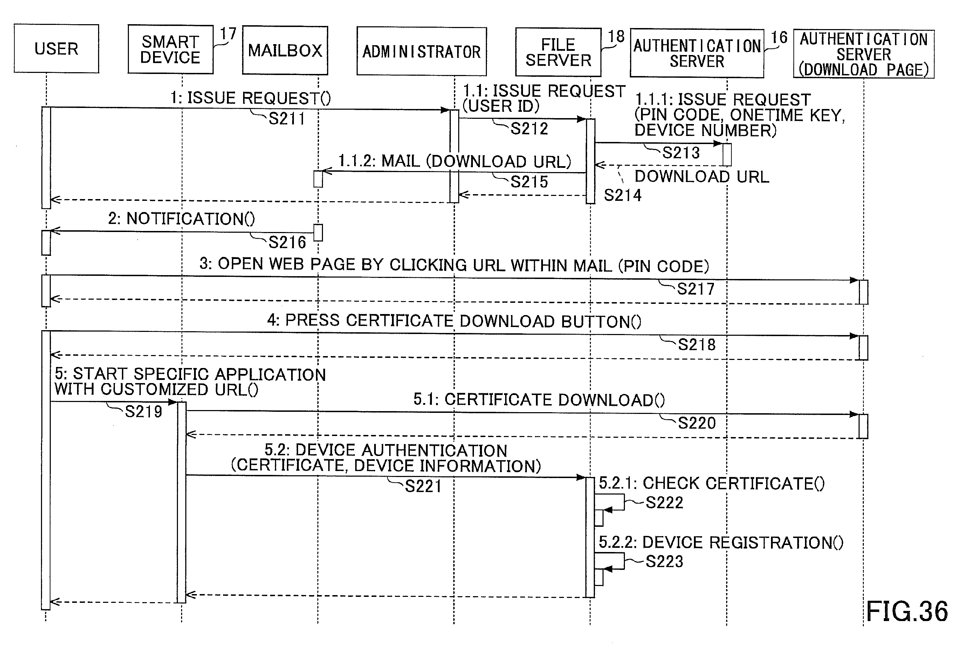

FIG. 36 is a sequence chart illustrating another exemplary smart device registration process. In step S211, the user communicates with the administrator by phone or email to request for registration of the smart device 17. In step S222, the administrator operates the administrator terminal 19 to send a certificate issue request to the file server 18. For example, the above-described web UI as illustrated in FIG. 34 may be used to send the certificate issue request.

In step S213, the file server 18 registers the information for certificate issuance received from the administrator in the authentication server 16 and requests the authentication server 16 to issue a certificate. In FIG. 36, the information for certificate issuance includes a PIN code, a onetime key, and a device number of the file server 18. The file server 18 retains the information for certificate issuance registered in the authentication server 16. In step S214, the file server 18 receives URL information for downloading the certificate (download URL) from the authentication server 16 as information for acquiring the certificate.

In steps S215 and S216, the file server 18 notifies the user of the download URL by email. In step S217, the user that is notified of the download URL by email operates the smart devices 17, clicks the download URL included in the email, and opens the login screen as illustrated at the left side of FIG. 35, for example.

The user enters a PIN code in the login screen of FIG. 35 in order to log into the certificate download page as illustrated at the center of FIG. 35, for example. If the login process is successful, the screen displayed by the smart device 17 may be switched to the certificate download page of FIG. 35. In step S218, the user operates the smart device 17 and presses the "Certificate Download Button" of the certificate download page of FIG. 35.

When the "Certificate Download Button" is pressed, in step S219, the smart device 17 starts a specific application (application for cooperating with the file server 18) using a customized URL, for example, and switches to the screen as illustrated at the left side of FIG. 35.

In step S220, the certificate is downloaded from the authentication server 16. In step S221, the smart device 17 requests for registration (pairing) with the file server 18 using the acquired certificate. In step S222, the file server 18 checks the validity of the certificate, and registers the smart device 17 if validity of the certificate is confirmed. Note that the process of checking the validity of the certificate is described in detail below.

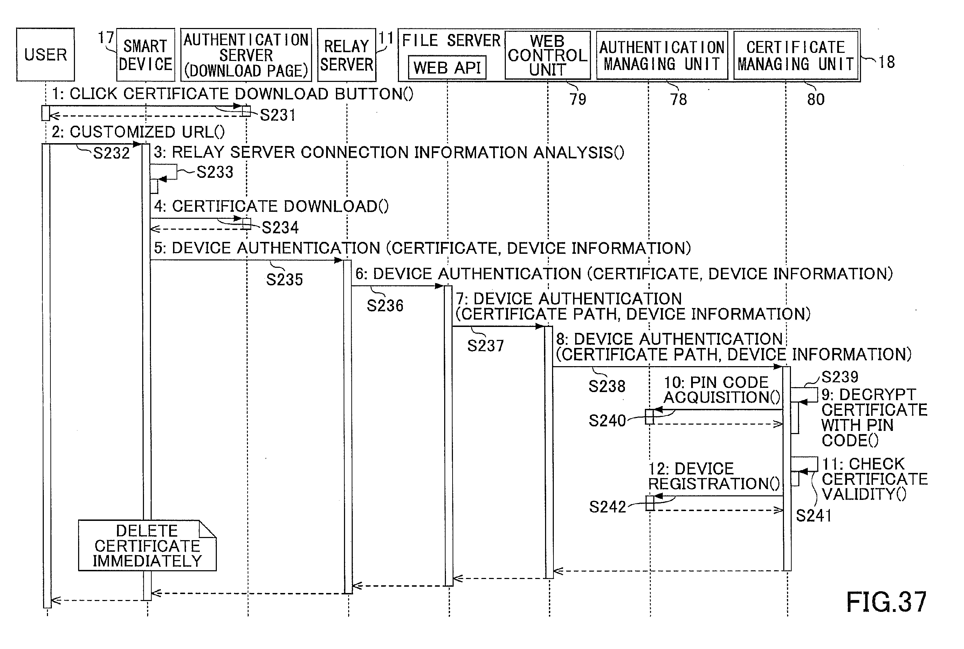

FIG. 37 is a sequence chart illustrating exemplary detailed processes performed in the steps after step S218 of FIG. 36. That is, FIG. 37 illustrates exemplary processes that may be performed after the certificate download button is pressed.

In step S231, the user operates the smart device 17 and presses the "Certificate Download Button" of the certificate download page of FIG. 35.

When the "Certificate Download Button" is pressed, in step S232, the smart device 17 starts a specific application (application for cooperating with the file server 18) using a customized URL, for example, and switches to the screen illustrated at the right side of FIG. 35.

In step S233, the smart device 17 analyzes relay server connection information for establishing a connection with the file server 18 via the relay server 11. Also, in step S234, the smart device 17 downloads an encrypted certificate that is encrypted using the PIN code from the authentication server 16.

In steps S235 and S236, the smart device 17 sends a request for device registration (pairing) using the certificate to the file server 18 via the relay server 11. In step S237, the web control unit 79 receives from smart devices 17 the request for device registration (pairing) using the certificate via a web API.

In step S238, the web control unit 79 sends a request for device registration (pairing) using the certificate to the certificate managing unit 80. In steps S239 and S240, the certificate managing unit 80 successively acquires a PIN code from the authentication managing unit 78 and attempts to decrypt (unlock) the certificate using the acquired PIN code. The authentication managing unit 78 retains the information for certificate issuance registered in the authentication server 16.

When the encrypted certificate is decrypted using the PIN code acquired from the authentication managing unit 78, the certificate managing unit 80 proceeds to step S241. In step S241, the certificate managing unit 80 determines whether the onetime key included in the certificate matches a onetime key included in information for certificate issuance managed by the authentication managing unit 78.

If the onetime key included in the certificate matches a onetime key included in information for certificate issuance that is managed by the authentication managing unit 78, the certificate managing unit 80 determines whether certificate information included in the certificate matches certificate information included in the information for certificate issuance managed by the authentication managing unit 78. Note that the certificate information may include information indicating the authentication server 16, for example.

If the certificate information included in the certificate matches certificate information included in the information managed by the authentication managing unit 78, the certificate managing unit 80 checks the validity of the certificate and sends a device registration request to the authentication managing unit 78 to have the smart device 17 registered. In turn, the authentication managing unit 78 performs necessary processes for registering the smart device 17 such as notifying the device managing unit 77 of the smart device 17 to be registered.

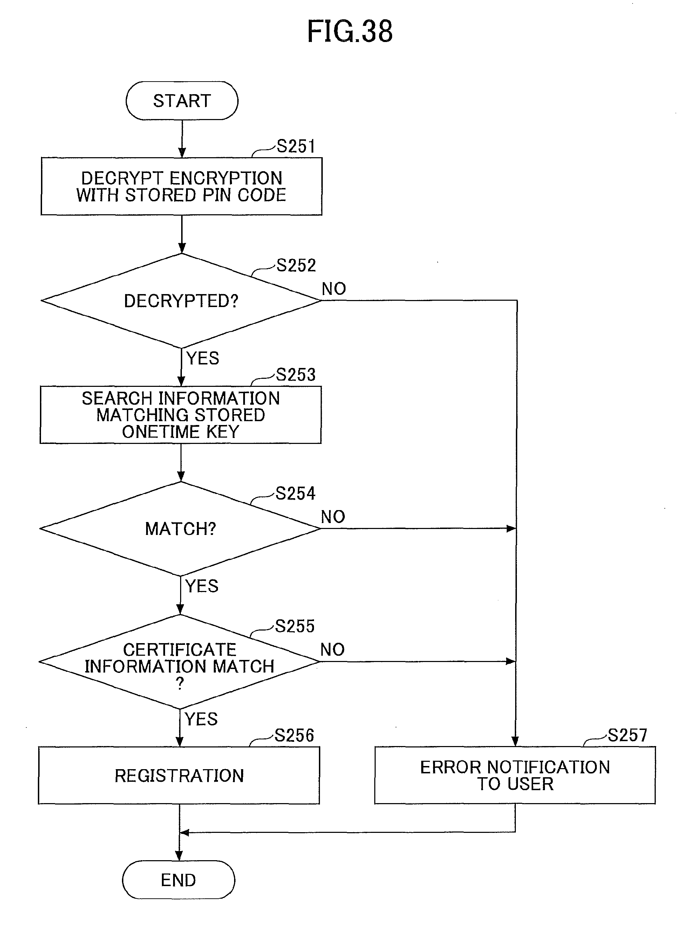

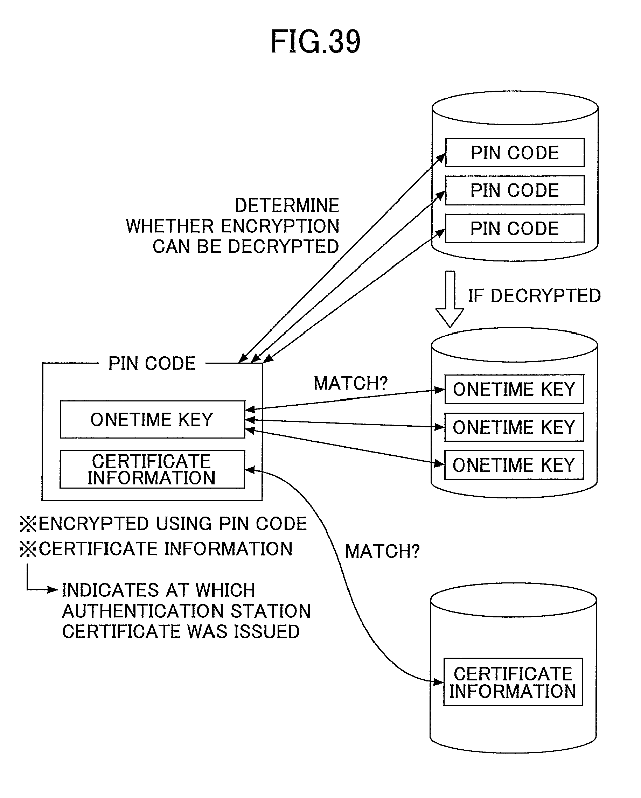

FIGS. 38 and 39 illustrate exemplary detailed processes that may be performed in the process steps from step S239 and onward of FIG. 37.

FIG. 38 is a flowchart illustrating an exemplary process of registering a smart device at a file server. FIG. 39 illustrates an exemplary process of checking the validity of a certificate.

In step S251 of FIG. 38, the certificate managing unit 80 successively acquires a PIN code from the authentication managing unit 78 and attempts to decrypt a certificate using the acquired PIN code. In step S252, if a PIN code for decrypting the encrypted certificate is not included in the PIN codes acquired from the authentication managing unit 78, the certificate managing unit 80 proceeds to step S257 where an error notification is made to the user of the smart device 17.

In step S252, when the encrypted certificate is decrypted by a PIN code acquired from the authentication managing unit 78, the certificate managing unit 80 proceeds to step S253. In step S253, the certificate managing unit 80 searches the information for certificate issuance stored in the database 81 to find a onetime key that matches the onetime key included in the certificate.

In step S254, the certificate managing unit 80 determines whether a onetime key matching the onetime key included in the certificate has been found from searching the information for certificate issuance stored in the database 81, and if a onetime key matching the onetime key included in the certificate could not be found, the process proceeds to step S257 where an error notification is made to the user.

If the certificate managing unit 80 is able to find a onetime key matching the onetime key included in the certificate from the information for certificate issuance stored in the database 81, the process proceeds to step S255.

In step S255, the certificate managing unit 80 determines whether the information for certificate issuance stored in the database 81 includes certificate information matching the certificate information contained in the certificate.

If certificate information matching the certificate information included in the certificate is found, the certificate managing unit 80 checks the validity of the certificate, and in step S256, the certificate managing unit sends a device registration request to the authentication managing unit 78 to have the smart device 17 registered. In turn, the authentication managing unit 78 performs necessary processes for registering the smart device 17 such as notifying the device managing unit 77 of the smart device 17 to be registered.

Note that if the certificate managing unit 80 determines in step S255 that there is no matching certificate information included in the information for certificate issuance stored in the database 81, the process proceeds to step S257 where an error notification is made to the user.

According to an aspect of the fourth embodiment, when registering the smart device 17 with the file server 18 (pairing) from outside the network N2, a certificate issued by the authentication server 16 may be used to register the smart device 17 to prevent unauthorized access from a third party (spoofing), for example. According to a further aspect of the fourth embodiment, when registering the smart device 17 with the file server 18 (pairing), a PIN code known to the user and a certificate issued by the authentication server 16 may be used to register the smart device 17 to prevent unauthorized access by a third party, for example.

That is, in the fourth embodiment, the administrator has access to a certificate including unique information (onetime key) for registering the smart devices 17. The administrator notifies the certificate download URL for downloading the certificate to the user. The user accesses the certificate download URL and downloads the certificate. To download the certificate, a PIN code that is known to the administrator and the user has to be entered, and in this way, unauthorized access and downloading of the certificate by a third party may be prevented. The user requests the file server 18 to register (pair) the smart device 17 using the certificate. The file server 18 identifies the user based on the PIN code and the certificate, and in this way, the file server 18 may register the smart device 17 in a safe and secure manner.

### [Other System Configurations]

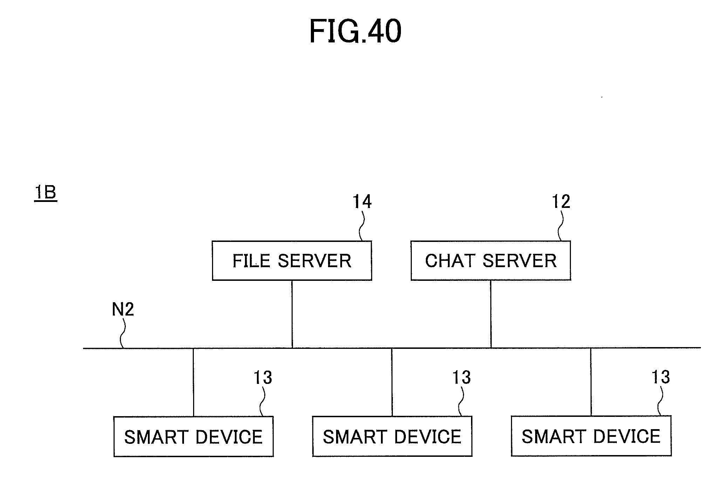

The configuration of the information processing system 1 as illustrated in FIG. 1 is merely one illustrative system configuration. FIG. 40 illustrates another exemplary configuration of an information processing system according to an embodiment of the present invention.

In the information processing system 1B of FIG. 40, the chat server 12, a plurality of the smart devices 13, and the file server 14 are connected to the network N2 such as a LAN. The information processing system 1B of FIG. 40 does not establish communication beyond a firewall, and therefore, the relay server 11 is omitted. Note that process operations similar to those implemented by the information processing system 1 described above may be implemented by the information processing system 1B as illustrated in FIG. 40. Also, in the information processing system 1B of FIG. 40, the chat server 12 and the file server 14 may be integrated into a single server, for example.

Further, the information processing system 1A as illustrated in FIG. 30 may also be configured to have the chat server 12, the authentication server 16, a plurality of the smart devices 17, the file server 18, and the administrator terminal 19 connected to the network N2.

According to an aspect of the present invention, chat contents and file contents may be displayed on a chat screen, and an image or a character string in a chat area may be displayed in a file area in highlighted display mode or as an image appended to a content displayed in the file area. In this way, users participating in a chat session may easily share comments and remarks on a file being shared among the users.

Also, according an aspect of the present invention, users participating in the chat session can share comments and remarks on a file in real time among the users. Also, according to an aspect of the present invention, the smart device 13 may be able to prompt cooperation between a file sharing function provided by the file server 14 and a chat function provided by the chat server 12.

Note that the present invention is not limited to the embodiments specifically disclosed above, and numerous variations and modifications may be made without departing from the scope of the present invention. Also, note that the file server 14 described above is an example of a file storage unit (or file storage apparatus) of the present invention. The chat server 12 is an example of a delivery unit (or a delivery apparatus) of the present invention. The display unit 21 is an example of a display unit of the present invention. The data transmitting unit 27 is an example of a transmitting unit of the present invention. The highlighting process and the data appending process described above are examples of a process of changing the display of a file. The drag and drop operation described above is an example of an operation of selecting information exchanged between terminal apparatuses and moving the selected information to an area displaying a file acquired from the file storage unit.

Also, note that an information processing system according to the present invention is not limited to the system configurations as illustrated in FIGS. 1, 30, and 40. For example, an information processing system according to the present invention may be configured by at least one information processing apparatus, and the various functions of the information processing system described above may be allocated to the information processing apparatus in any suitable manner as long as the functions can be properly implemented.

The present application is based on and claims the benefit of priority of Japanese Patent Application No. 2014-007230 filed on January 17, 2014 and Japanese Patent Application No. 2014-118900 filed on June 9, 2014, the entire contents of which are hereby incorporated by reference.

## Claims

1. An information processing system (1, 1A, 1B) including at least one information processing apparatus (11, 12, 14, 16, 18) and a terminal apparatus (13, 17) used by a user that are interconnected, the information processing system comprising:
a file storage unit (14, 18) configured to store a file to be shared;
a delivery unit (12) configured to deliver information received from one of the terminal apparatus to another of the terminal apparatus that is associated with the one of the terminal apparatus;
a display unit (21) configured to display at the terminal apparatus a file acquired from the file storage unit and information exchanged between the terminal apparatuses via the delivery unit; and
a transmitting unit (27) configured to transmit to the delivery unit information for changing the display of the file displayed by the display unit based on a user operation of selecting the information exchanged between the terminal apparatuses and displayed by the display unit.

2. The information processing system as claimed in claim 1, wherein, based on the user operation of selecting the information exchanged between the terminal apparatuses and displayed by the display unit, the display unit changes the display of the file acquired from the file storage unit.

3. The information processing system as claimed in claim 2, wherein, based on the user operation of selecting the information exchanged between the terminal apparatuses and displayed by the display unit, the transmitting unit transmits to the delivery unit information for visually changing the selected information exchanged between the terminal apparatuses in a case where the selected information exchanged between the terminal apparatuses is included in the file displayed by the display unit.

4. The information processing system as claimed in any one of claims 1-3, wherein, based on the user operation of selecting the information exchanged between the terminal apparatuses and displayed by the display unit, the display unit changes the display of the selected information exchanged between the terminal apparatuses.

5. The information processing system as claimed in claim 4, wherein the display unit displays the information exchanged between the terminal apparatuses via the delivery unit that has information for changing the display of the file displayed by the display unit attached thereto.

6. The information processing system as claimed in claim 1, wherein, based on an operation of selecting the information exchanged between the terminal apparatuses and displayed by the display unit and moving the selected information to an area displaying the file acquired from the file storage unit, the display unit changes the display of the file acquired from the file storage unit.

7. The information processing system as claimed in claim 6, wherein, based on the operation of selecting the information exchanged between the terminal apparatuses and displayed by the display unit and moving the selected information to an area displaying the file acquired from the file storage unit, the transmitting unit transmits to the delivery unit information for displaying the selected information exchanged between the terminal apparatuses in the area displaying the file acquired from the file storage unit in a case where the file displayed in the area is the same as the file acquired from the file storage unit to which the operation has been directed.

8. The information processing system as claimed in any one of claims 1, 6, and 7 wherein, based on an operation of selecting the information exchanged between the terminal apparatuses and displayed by the display unit and moving the selected information to an area displaying the file acquired from the file storage unit, the display unit displays the selected information exchanged between the terminal apparatuses in the area displaying the file acquired from the file storage unit.

9. The information processing system as claimed in claim 8, wherein the display unit displays the information exchanged between the terminal apparatuses via the delivery unit that has information for changing the display of the file displayed by the display attached thereto.

10. The information processing system as claimed in any one of claims 1-9, wherein the display unit displays at the terminal apparatus a screen including a portion displaying a content of the file acquired from the file storage unit and a portion displaying the information exchanged between the terminal apparatuses via the delivery unit.

11. The information processing system as claimed in any one of claims 1-10, wherein the delivery unit uses a chat function to deliver information received from one of the terminal apparatus used by a user to another of the terminal apparatus used by another user that is associated and grouped with the user of the one of the terminal apparatus.

12. The information processing system as claimed in any one of claims 1-11, wherein
before the file storage unit accepts a registration request to be allowed access to a stored file from the terminal apparatus, the file storage unit provides to the terminal apparatus information for enabling the terminal apparatus to acquire a certificate including authentication information from an authentication server apparatus (16) and retains the authentication information; and
when the file storage unit accepts a registration request using the certificate from the terminal apparatus that has acquired the certificate from the authentication server apparatus, the file storage unit determines the validity of the certificate based on a comparison between the authentication information included in the certificate and the authentication information retained at the file storage unit, and registers the terminal apparatus to allow access to the stored file upon confirming the validity of the certificate.

13. A method for controlling a terminal apparatus (13, 17) that is included in an information processing system (1, 1A, 1B) interconnecting a file storage apparatus (14, 18) that stores a file to be shared, a delivery apparatus (12) that delivers information received from one terminal apparatus to another terminal apparatus that is associated with the one terminal apparatus, and a plurality of terminal apparatuses (13, 17) that are used by users, the method comprising the steps of controlling the terminal apparatus to execute:
a display step of displaying a file acquired from the file storage apparatus and information exchanged between the terminal apparatuses via the delivery apparatus; and
a transmission step of transmitting to the delivery apparatus information for changing the display of the file displayed in the display step based on a user operation of selecting the information exchanged between the terminal apparatuses and displayed in the display step.
